# EUROPEAN PATENT APPLICATION

(11) **EP 4 141 131 A1**
(43) Date of publication of application: **01.03.2023**
(21) Application number: 20851377.0
(22) Date of filing: 23.04.2020
(51) Int. Cl.: C21B 13/02

(54) **FACILITY AND METHOD FOR PRODUCTION OF DIRECT REDUCED IRON**

(71) Applicant: Kess Limited Liability Company, Kobe-shi, Hyogo 655-0872 (JP)
(72) Inventor: TETSUMOTO, Masahiko, Kobe-shi, Hyogo 655-0872 (JP)
(74) Representative: Plasseraud IP
(86) International application number: PCT/JP2020/017566
(87) International publication number: WO 2021/029114

(57) **Abstract**

The present disclosure provides a facility to produce direct reduced iron, which makes it possible to perform reforming and reduction and adjust the carbon amount in a product within a wide range without requiring an externally heating reformer and without causing the metal dusting problem in a circulating gas preheater and the problem of sintering each other or fusion between reduced iron, in a furnace.

The facility to produce the direct reduced iron according to the present invention is equipped with a water content control device for controlling the water content in a gas discharged from a shaft-type reduction furnace, a first gas mixing device for mixing the gas from which a portion of water has been removed with an oxygen-containing gas and a hydrocarbon-containing gas to produce a mixed gas, and an auto-thermal reformer for reforming the mixed gas with its energy. The facility is also equipped with a cooling gas loop for circulating a cooling gas, wherein the cooling gas has a hydrocarbon concentration of 50% or more, and the cooling gas loop is equipped with a cooling gas after-cooler having a flow rate control function and capable of controlling the temperature of the cooling gas.

## Description

### TECHNICAL FIELD

The present invention relates to the facility and method for the production of direct reduced iron, which adjusts the carbon content of the reduced iron over a wide range without using an external heat reformer (reformer) and regardless of the conditions in the reduction zone. The present invention relates to the direct-reduced iron manufacturing facility and manufacturing method capable of efficiently reforming and reducing without causing problems such as metal dusting in a circulating gas preheater (preheater). The present invention also relates to the direct reduced iron manufacturing facility and manufacturing method of reducing iron oxide by providing hydrogen as a main reducing agent.

### BACKGROUND ART

The main method for producing metallic iron in a vertical reduction furnace (shaft furnace) by reducing iron oxide raw materials (raw materials) such as iron lump ore or fired pellets using iron ore powder is the blast furnace ironmaking method and a direct reduction iron-making method.

The direct reduction ironmaking method is represented by the Midrex process shown in Patent Document 1 and the HYL process shown in Patent Document 2. In these methods, a reducing gas containing hydrogen (H₂) and carbon monoxide (CO) as main components is introduced into a vertical reduction furnace, and iron oxide is reduced in a solid phase to produce solid metallic iron.

Reducing gas, mainly composed of hydrogen and carbon monoxide, is introduced into the vertical reduction furnace and reacts with the iron oxide in the reduction zone. A part of the reducing gas removes oxygen from the iron oxide and produces steam (H₂O) and carbon dioxide (CO₂).

The gas (top gas) discharged from this vertical reduction furnace is dust-removed and cooled by a scrubber in the Midrex process. After that, a part of it is pressurized, fresh hydrocarbon-containing gas is added, and a reformer reforms it and recycled it.

In the HYL process, a reformed gas newly reformed from steam and a hydrocarbon-containing gas is mixed with a part of the dust-removed and cooled top gas and heated by an external combustion type circulating gas heater (reheater). Then, it is introduced into a vertical reduction furnace and recycled.

When the reduced iron is cooled and discharged, a cooling zone is provided below the reduction zone, and a cooling gas (cooling gas) is introduced into the cooling zone to cool the reduced iron. The cooling gas used for this is discharged from the middle part of the vertical reduction furnace below the reduction gas introduction part of the vertical reduction furnace, de-dusted and cooled in a scrubber, and then pressurized and circulated.

In any of the above cases, the reducing gas is usually reformed by heating to 900 °C or higher with an external heat reformer (reformer) filled with a catalyst and producing a reducing gas. The reformer tube used in this externally heated reformer requires an expensive alloy tube because it is exposed to a higher temperature than the reforming gas temperature.

In the Midrex process, a circulating gas containing carbon dioxide and water vapor and a hydrocarbon-containing gas are mixed and reformed in an external heat reformer (reformer) after preheating, under low pressure, for example, at a pressure of 350 kPa (A) or less.

As described above, the gas can be reformed to the reduction degree of gas (R-Value = (H₂ + CO) / (H₂O + CO₂)) of 10 to 12 or more required to achieve efficient iron oxide reduction by unit operation without carbon deposition on the catalyst of the reformer since the pressure at the time of reforming is as low as 350 kPa (A) in the Midrex process.

In the HYL process, steam and a hydrocarbon-containing gas are mixed under high pressure, for example, at a pressure of 700 kPa (A) or more, and after preheating, the reformed gas is produced by passing it through an external heat reformer (reformer).

Since the HYL process has high pressure, reforming is performed with excess steam, for example, a mixed gas having an S / C (Steam / Carbon) ratio of 3 or more, to prevent carbon deposition in an external heat reformer (reformer) and it needs to remove excess steam components after reforming. For this purpose, it is cooled once to remove a part of the water vapor component and then reheated.

Therefore, in the case of the HYL process, both an external heat reformer (reformer) and an external combustion type circulating gas heater (reheater) are required.

In either case, it is necessary to use a very expensive alloy for the external heat reformer (reformer) tube or the external combustion type circulating gas heater (reheater) tube as described above. It causes the problem that a large initial investment is required.

In addition, there are cases where the tube needs to be replaced within a short time due to damage caused by metal dusting due to carbon deposition on the surface of the alloy tube. Even if damage does not occur in such a short time, it is necessary to replace the tube every 5 to 10 years due to the high heat load, it causes the problem that the replacement cost is high, and it needs production suspension during the replacement.

In the low-pressure operation performed by the Midrex process, the problems of carbon deposition and metal dusting are avoided. Still, the reformer tube needs to be replaced every 5 to 10 years, as mentioned above. Further, the carbon content in reduced iron is limited to about 1.5% to 2% and 3% maximum because of the low pressure.

In recent years, hydrogen reduction has been studied to reduce CO₂ emitted from the iron-making process, but it is impossible to add carbon to the reduced iron because there is no carbon source in the process when iron oxide is directly reduced by hydrogen alone.

On the other hand, in the steelmaking process, an appropriate amount of carbon is indispensable in the molten iron to maintain the quality of the final product and to keep the solidification temperature low. Further, in the reduced iron electric furnace melting process, it is currently desired that the amount of carbon in reduced iron is 2% or more, preferably 3% or more, because it is aimed to shorten the melting time by oxygen blowing, reducing electricity consumption, and improving product quality.

### [Reference Documents of Conventional Art]

### [Patent Documents]

Patent Document 1: US 3,764,123 A
Patent Document 2: US 4,336,063 A
Patent Document 3: US 5,858,057 A

### DESCRIPTION OF THE DISCLOSURE

### [Problems to be Solved by the Disclosure]

From the above technical background, the method represented by the HYL ZR method, as disclosed in Patent Document 3, has been proposed not to use an external heat reformer that requires a large initial investment to reduce the initial investment cost and replacement cost of the reformer tubes.

In this paper, it has been proposed to recycle the top gas discharged from the vertical reduction furnace after removing the oxidizing gas of H₂O and CO₂, mixing hydrocarbon-containing gas, steam, and heating from 850 °C to about 1000 °C.

It has been proposed to mix oxygen with the heated mix gas further, heat it to about 900 °C to 1150 °C with the partial combustion heat, and put it into the furnace.

In this method, gas reforming reaction to a suitable reduction degree (for example, R-Value 10 or higher) for efficiently reducing iron and reducing iron oxide by the reformed gas are performed in one furnace. In this method, the required amount of heat is covered by the preheating of the circulating gas and the partial combustion heat of the mixed oxygen.

Therefore, the mixed gas is heated to the temperature mentioned above range (around 850 °C to 1000 °C) with an external combustion type circulating gas preheater (preheater) and further heated around 900 °C to 1150 °C by the partial combustion of mixed oxygen.

The gas heated by this preheater is a gas containing CO and H₂ as the main components that most of CO₂ and H₂O have been removed as mentioned above, added a hydrocarbon-containing gas and an appropriate amount of H₂O again.

The main components of this gas are CO, H₂, and CH₄, and this gas is a gas having strong carburizing properties. Therefore, it has been reported that heating this gas with a preheater to a high temperature, for example, 850 °C or higher disclosed in Patent Document 3, may cause problems of carbon deposition on the tube surface of the preheater, carburizing on ferroalloy and metal dusting.

Here, the reforming reaction is a reaction in which the volume increases as represented by CH₄ + H₂O = CO + 3H₂ and CH₄ + CO₂ = 2CO + 2Hz. Therefore, under high pressure (for example, 700 kPa (A) or more), the higher partial pressure of hydrocarbon gas is required to cause this reforming reaction. Therefore, it is necessary to mix a large amount of hydrocarbon-containing gas, and raising the temperature of this gas having a high partial pressure of the hydrocarbon gas causes problems of carbon deposition, carburizing on ferroalloy, and metal dusting.

It is effective to lower the circulating gas pressure in the preheater and the hydrocarbon concentration or the preheating temperature of the circulating gas to avoid this problem, but there are other issues, as explained below.

Patent Document 3 proposes to increase the carbon content of reduced iron by causing a carbon deposition reaction that occurs simultaneously as reforming on the metallic iron of the reduced iron in the furnace.

However, if the gas pressure is lowered and the hydrocarbon concentration is lowered to avoid the carbon deposition problem in the preheater, the carbon deposition reaction on the surface of metallic iron in the reduction furnace and the carburizing reaction with metallic iron are also suppressed. It causes a decrease in carbon content in the product as a result.

On the other hand, if the circulating gas preheating temperature is lowered to avoid the problems of carbon deposition, carburizing on ferroalloys, and metal dusting in the preheater, the amount of heat that can be provided by preheating decreases. Mixing a large amount of oxygen and hydrocarbon-containing gas in the stream is necessary to compensate for it later. Thus, the temperature of the gas input to the reduction furnace rises.

This way, when the input temperature to the reduction furnace is raised to a high temperature, for example, around 900 °C to 1150 °C or higher, as disclosed in Patent Document 3, it causes problems. These problems include fine generation in the furnace, sintering each other or fusion between reduced iron (cluster), and damage to refractories due to iron fines depending on the raw material.

On the contrary, if the input temperature is suppressed to avoid the sintering of each other or fusion problems in the furnace, the reaction temperature decreases. Then the reduction degree of the gas after reforming also decreases, making it difficult to reduce iron oxide efficiently.

Because of the above circumstances, the present invention is a process for producing the reduced iron by carbon monoxide and/or hydrogen without using an external thermal reformer. Further, the present invention is not depending on the reduction conditions; for example, even in hydrogen reduction, the desired amount of carbon can be adjusted without lowering the amount of carbon in the reduced iron. At the same time, the present invention can maintain the gas inlet temperature of the reduction furnace, not pulverize reduced irons, not fuse and cluster with each other, and not cause damage to the refractories. The temperature after the reforming reaction in the reduction furnace and the reduction degree of the reducing gas can be kept high while maintaining a furnace inlet temperature within the range mentioned above. The present invention can also solve the problems of carbon deposition in the combustion type circulating gas preheater (preheater), which causes carbonization on alloyed metal and metal dusting on the preheater. The purpose is to provide such a process as it has high equipment reliability and reduction efficiency that can produce high-quality reduced irons, as mentioned above.

In addition, the purpose of this invention is to provide a process capable of producing a direct reduced-iron containing the required amount of carbon contents for steel making by circulating the carbon component in the system and compensating the only amount of consumed carbon from the outside, even when hydrogen is used as the main component in the reducing gas.

### [Summary of the Disclosure]

The first aspect of the invention has a feature that hydrocarbon concentration in a cooling gas is controlled at 50% or more, preferably 70% or more, in a cold direct reduced-iron (Cold DRI) making facility and method where an iron oxide raw material is reduced and cooled with the cooling gas in a vertical reduction furnace. Moreover, it can control the flow rate of the cooling gas introduced into the reduction furnace, and an aftercooler can control the temperature of the cooling gas. The after cooler is preferably a chiller-type aftercooler (cooling gas chiller), which can cool at least a part of the cooling gas to a temperature of + 3 to 4 °C, less than a wet bulb temperature of the atmosphere. Alternatively, the aftercooler is preferably a cooler that can supply low-temperature cooling gas to the reduction furnace by mixing a hydrocarbon-containing gas cooled by its adiabatic expansion.

The second aspect has the following features in a Cold DRI making facility and method where an iron oxide raw material is reduced in a vertical reduction furnace and cooled with a cooling gas in which hydrocarbon concentration is controlled at 50% or more, preferably 70% or more. The feature is that the reduction zone and the cooling zone are separated, and both zones are connected by a Cold DRI chute that transfers the reduced iron from the reduction zone to the cooling zone. Moreover, it has a separate gas duct from the Cold DRI chute, which can introduce the cooling gas from the cooling zone to at least one of the reducing zone and the circulating gas duct without restricting the flow of the reduced iron descending.

The third aspect is a facility and method for producing a cold direct-reduced iron (Cold DRI) by reducing the iron oxide raw material and then cooling it in a vertical reduction furnace with the following feature. The feature provides an intermediate cooling zone between the reduction and cooling zones. Moreover, two cooling gas loops are arranged, and the outlet temperature of the upper cooling gas loop (intermediate cooling zone) is adjusted to be higher than the outlet temperature of the lower cooling gas loop (cooling zone).

The fourth aspect is a facility and method for producing a direct-reduced iron (DRI) by reducing the iron oxide raw material in a vertical reduction furnace with the following feature. The feature is that the facility has moisture adjusting device such as a scrubber that removes a part of the moisture (H₂O), an oxidized component from the top gas discharged from the vertical reduction furnace. Moreover, the gas for which the moisture has been adjusted is pressurized to circulate in the facility. Furthermore, it has an auto thermal reformer (self-heating reformer) that reforms the pressurized circulating gas, to which a hydrocarbon-containing gas and an oxygen-containing gas are mixed with its energy to increase the reduction degree of the gas. Furthermore, it has a first gas mixing device before the auto-thermal reformer that can adjust oxygen-containing gas and hydrocarbon-containing gas to control the inlet gas temperature, outlet gas temperature, and reduction degree of the outlet gas of the auto-thermal reformer within an appropriate range.

The fifth aspect is a facility and method for directly producing reduced iron (DRI) by reducing an iron oxide raw material in the aforementioned vertical reduction furnace with the following feature. The feature has a second gas mixing device that mixes the oxygen-containing gas and the hydrocarbon-containing gas downstream of the auto-thermal reformer so that a further reforming reaction in the reduction furnace can improve the reduction degree and increase the reducing gas temperature.

The sixth aspect is a facility and method for directly producing reduced iron (DRI) by reducing an iron oxide raw material in the aforementioned vertical reduction furnace with the following feature. The feature is that water vapor is removed from the top gas discharged from the vertical reduction furnace, and it has a CO₂ remover that removes a part or all of carbon dioxide (CO₂), which is another oxidation component so that CO₂ concentration at the inlet of the auto-thermal reformer can be adjusted.

The seventh aspect is a facility and method for directly producing reduced iron (DRI) by reducing an iron oxide raw material in the aforementioned vertical reduction furnace with the following feature. The feature is to adjust the gas pressure at the inlet of the auto-thermal reformer to less than 600 kPa (A), preferably less than 500 kPa (A), and more preferably less than 350 kPa (A) to produce a reformed gas with a high reduction degree and avoid the problem of carbon deposition in the auto-thermal reformer.

The eighth aspect is a facility and method for directly producing reduced iron (DRI) by reducing an iron oxide raw material in the aforementioned vertical reduction furnace with the following feature. The feature is to have a heat exchanger that preheats the circulating gas before mixing the oxygen-containing gas. Furthermore, the circulating gas temperature after preheating is set to less than 850 °C, preferably less than 700 °C, and more preferably less than 550 °C to avoid problems caused by carbon deposition and carburizing in the heat exchanger.

The ninth aspect is a facility and method for directly producing reduced iron (DRI) by reducing an iron oxide raw material in the aforementioned vertical reduction furnace with the following feature. The feature is to adjust the amount of oxygen-containing gas and the amount of hydrocarbon-containing gas to be mixed so that the temperature of the gas at the inlet of the auto-thermal reformer is adjusted to 1500 °C, or lower, preferably 1400 °C or lower, and the temperature of the gas at the outlet is 700 °C or higher, preferably 750 °C or higher, more preferably 800 °C or higher.

The tenth aspect is a facility and method for directly producing reduced iron (DRI) by reducing an iron oxide raw material in the said vertical reduction furnace with the following feature. The feature is to adjust the amount of oxygen-containing gas and the amount of hydrocarbon-containing gas to be mixed so that the temperature of the gas at the inlet of the auto-thermal reformer is adjusted to 1500 °C or lower, preferably 1400 °C or lower, and the temperature of the gas at the outlet is 700 °C or higher, preferably 750 °C or higher, more preferably 800 °C or higher. Moreover, a plurality of stages of auto-thermal reformers is provided so that the inlet gas of the furnace has the desired reduction degree.

The eleventh aspect is a facility and method for directly producing reduced iron (DRI) by reducing an iron oxide raw material in the said vertical reduction furnace with the following feature. The feature is to have a methane generator that reacts with carbon dioxide and hydrogen under a catalyst to generate methane. Moreover, the recovered carbon dioxide by the CO₂ remover and hydrogen introduced from outside the system generate methane. Furthermore, the generated methane is used as the hydrocarbon gas to produce the reducing gas or as the hydrocarbon gas mixing with the cooling gas to cool the reduced iron.

More specifically, the present invention has the following configuration.

One configuration of the present invention is a facility for reducing the iron oxide raw materials in a vertical reduction furnace and then cooling it to produce and discharge the cold direct reduced iron (Cold DRI). The Cold DRI manufacturing facility consists of a vertical reduction furnace (shaft furnace) that reduces iron oxide raw materials, a cooling gas scrubber (direct contact type water-cooled cooling gas) that removes dust and cools the cooling gas for cooling the reduced iron, a cooling gas compressor, and a cooling gas aftercooler provided on the outlet side of the cooling gas compressor to adjust the amount of carbon in the reduced iron, preferably a chiller type aftercooler or a type of after cooler that supplies a low-temperature cooling gas to the reduction furnace by introducing a cold hydrocarbon-containing gas cooled by its adiabatic expansion heat.

A cooling gas aftercooler, preferably a chiller type aftercooler or a type of aftercooler that supplies a low-temperature cooling gas to the reduction furnace by introducing a cold hydrocarbon-containing gas cooled by its adiabatic expansion heat can adjust the temperature of at least a part of the gas introducing into the furnace to the atmospheric wet-bulb temperature + 3 to 4 °C or lower, for example, 35 °C or lower.

In another configuration of the Cold DRI manufacturing facility, the vertical reduction furnace is divided into the reduction zone and the cooling zone. Moreover, the furnace has a separate gas duct (cooling gas connecting duct) from the Cold DRI chute that transfers the reduced iron. The gas duct can introduce the cooling gas to at least one of the reduction zone and the circulating gas duct. The cooling gas introduced into the circulating gas line is preferably mixed with at least one of the reducing gas lines to the vertical reduction furnace and the gas line upstream of the reformer provided in the reduced iron production facility. The reformer includes not only an auto-thermal reformer but also an external thermal reformer.

In another configuration of the Cold DRI manufacturing facility, an intermediate cooling zone is provided between the reduction zone and the cooling zone, and a gas loop is provided in each of the intermediate cooling zone and the cooling zone. The temperature and flow rate of the cooling gas of the upper gas loop provided in the intermediate cooling zone and the lower gas loop provided in the cooling zone can be controlled separately.

In the preferred configuration of the above-mentioned Cold DRI manufacturing facility, a dry cooling gas dust collector and a cooling gas heat exchanger such as a hydrocarbon-containing gas preheater or a boiler are equipped to recover heat from the cooling gas on the outlet side of the furnace, which becomes hot.

Also, a dry-type compressor is installed in the intermediate cooling zone.

Another configuration of the reduced iron production facility comprises a vertical reduction furnace (shaft furnace) that reduces iron oxide raw materials, a top gas scrubber that removes dust, cools and adjusts water content by removing moisture from a gas (top gas) discharged from the shaft furnace after reduction, a circulating gas compressor, a first gas mixer that mixes a high-concentration oxygen-containing gas such as pure oxygen and a hydrocarbon-containing gas, an auto-thermal reformer that reforms the gas, a cooling gas scrubber for removing dust from and cooling the cooling gas for cooling reduced iron, and a cooling gas compressor.

In a preferred configuration of the direct reduced iron production facility, a second gas mixing device is provided so that a high concentration of oxygen-containing gas and a hydrocarbon-containing gas are mixed downstream of the auto-thermal reformer to promote reforming (In-situ reforming) in the vertical reduction furnace.

In a further preferred configuration of the direct reduced iron production facility, water vapor is removed from the top gas discharged from the vertical reduction furnace, and a CO₂ remover is provided so that the CO₂ concentration at the inlet of the auto-thermal reformer can be adjusted by removing a part or all of the carbon dioxide (CO₂), which is another oxidizing component.

A preferable configuration of the direct reduced iron production facility is equipped with an auto-thermal reformer that allows the oxidation and the reforming to proceed with one reformer.

In a further preferred configuration of the direct reduced iron production facility, the auto-thermal reformer is arranged in a U-shape or a V-shape so that the used catalyst is discharged from the lower part, and a new catalyst is filled from the upper part for easy catalyst replacement. Further, in a preferred configuration of the direct reduced iron production facility, a similar layer filled with an inert catalyst such as alumina balls or the like capable of removing fine solids such as soot and dust is placed upstream of the auto-thermal reformer to reduce the frequency of catalyst replacement.

In a further preferred configuration of the direct reduced iron production facility, a heat exchanger (at least one of a top gas heat exchanger for recovering the top gas heat and a circulating gas preheater (preheater)) is provided so that the preheating temperature of the circulating gas can be adjusted. The heat exchanger exchanges heat with the outlet gas of the CO₂ remover and the top gas.

In a further preferred configuration of the direct reduced iron production facility, a reformed gas cooler is equipped for adjusting the temperature of the gas introduced into the furnace depending on the raw material to avoid problems including fine generation in the furnace, sintering each other, or fusion of reduced irons (clusters), and damage to the refractory by the iron fines.

A further preferred configuration of the direct reduced iron production facility provides a reforming gas mixer for mixing the temperature-controlled reformed gas and hydrocarbon gas into the furnace input gas line.

A further preferred configuration of the direct reduced iron production facility has a reactor that produces methane from CO₂ and hydrogen, and hydrogen is mixed with at least a portion of the carbon dioxide recovered by the CO₂ remover to produce methane. At least a part of the methane produced by the methane generator can be used as a hydrocarbon gas to produce reducing gas or to be mixed with a cooling gas to cool reduced iron.

Further, the present invention is a method for producing the direct reduced iron in which raw materials for iron oxide and a reducing gas are brought into contact with each other in a vertical reduction furnace to produce the direct reduced iron. The method for producing direct reduced iron comprises a water content adjustment process in which a part of the water is removed from the top gas discharged from the vertical reduction furnace to adjust it, a gas mixing process in which an oxygen-containing gas and a hydrocarbon-containing gas are added to the water-adjusted gas, and a reformed gas manufacturing process in which the mixed gas is reformed with its energy and produces a reformed gas.

### [Effect of the Disclosure]

In a facility for directly producing reduced iron (Cold DRI) by reducing and cooling an iron oxide raw material in a vertical reduction furnace, the hydrocarbon concentration in the cooling gas is set to 50% or more, preferably 70% or more. And then, a cooling gas aftercooler, preferably a chiller type aftercooler (cooling gas chiller) or a type of aftercooler that supplies a low-temperature cooling gas to the reduction furnace by introducing a cold hydrocarbon-containing gas cooled by its adiabatic expansion heat is provided. In this configuration, it can be possible to cool the reduced iron to the desired temperature and raise the cooling gas outlet temperature by lowering the cooling gas inlet temperature with an aftercooler and, simultaneously, reducing the cooling gas flow rate charged into the furnace.

As a result, the reduced high-temperature iron encounters the sufficiently heated hydrocarbon gas at the upper part of the cooling zone. Accordingly, it is possible to increase the amount of carbon in the reduced iron to 3% or more, regardless of the reduction conditions. For example, even in the case of hydrogen reduction or the low pressure in the reduction zone and the low hydrocarbon partial pressure, it is possible to increase the amount of carbon.

That is, by adjusting the temperature and flow rate of the cooling gas, the carbon content of the reduced iron can be controlled without greatly depending on the composition and pressure of the gas in the reduction zone. Accordingly, it becomes possible to supply the reduced iron with the optimum temperature and carbon content depending upon the transfer equipment to an electrical arc furnace or the operating requirements of the electrical arc furnace, regardless of the method or the condition for producing the reformed gas.

When the reduction zone and the cooling zone are separated, a separated gas duct (a gas duct for the reduction zone or a gas duct for the circulation gas line) from the reduction iron descent chute is provided so that the cooling gas can be introduced from the cooling zone to the reduction zone or the circulating gas line.

This cooling gas is heated by exchanging heat with reduced iron in the cooling zone and cooling the reduced iron. Since at least a part of the cooling gas heated is introduced into the reduction zone through the gas duct for the reduction zone, it is possible to introduce the cooling gas into the reduction zone without inhibiting the descending of the reducing iron through the reduction iron descent chute.

This cooling gas is heated to almost the same temperature as the reduced iron by exchanging heat further with the reduced iron in the region below the reduction gas introduction portion of the reduction zone.

As a result, the sufficiently heated cooling gas containing of which the main component is hydrocarbon gas, and the high-temperature reduced iron encounters each other in the region below the reduced gas introduction portion, and the amount of carbon in the reduced iron can be increased the same as the above.

After that, the cooling gas rises in the reduction zone, but since the temperature is already sufficiently high, the stagnation of the reduction reaction due to the cooling effect of the cooling gas does not occur. Accordingly, the efficient reduction is not hindered.

Further, when a part of this heated cooling gas is introduced into the circulating gas line without being cooled by the direct contact type water-cooled cooling gas cooler, the following effects are obtained.

A hydrocarbon-containing gas is introduced into the cooling gas loop to maintain the concentration of hydrocarbon gas in the cooling gas. Accordingly, it is necessary to extract the cooling gas corresponding to the volume increase of the gas injection mentioned above and the volume expansion in the cooling zone outside of the system to maintain constant pressure.

If the cooling gas is cooled and then returned to the circulating gas line, the low-temperature cooling gas is mixed with the circulating gas, which causes a problem of lowering the overall thermal efficiency and the reduction efficiency. However, if the heated cooling gas returns to the circulating gas line without cooling with direct contact water-cooled cooling gas cooler, the thermal efficiency does not decrease.

Also, since most of the hydrocarbon gas required for reduction can be preheated without installing a separate preheater, the equipment cost of the external preheater for the hydrocarbon-containing gas can be reduced.

If most of the cooling gas introduced into the cooling zone is introduced directly into the reduction zone and into the circulating gas line (reduction furnace input gas (reducing gas) and/or circulating gas) without cooling, most of the hydrocarbon-containing gas required for the entire process, can be preheated through the cooling zone. In addition, the amount of circulating cooling gas extracted from the cooling zone, cooled, and then introduced into the cooling zone is significantly reduced. That is, it becomes a state close to a one-through process.

Therefore, since most of the cooling gas is a newly introduced hydrocarbon-containing gas, the size of the cooling gas compressor that pressurizes the circulating cooling gas can be reduced, and the required power is also reduced. In addition, since the amount of cooling gas to be cooled is reduced, water consumption can be reduced.

Furthermore, the hydrocarbon concentration in the circulating cooling gas can be improved, and the amount of carbon in the reduced iron can be improved.

In addition, the temperature at the inlet of the cooling zone largely depends on the temperature of the newly introduced hydrocarbon-containing gas. Since this hydrocarbon-containing gas is supplied at high pressure from the natural gas supply station in most cases, the effect of lowering the temperature at the inlet of the cooling zone can be expected by depressurizing and mixing natural gas due to adiabatic expansion.

When an intermediate cooling zone is provided between the reduction zone and the cooling zone, and when independent gas loops are provided for the intermediate cooling zone and the cooling zone, each flow rate and the temperature of the gas at the inlet of the reduction furnace is controlled independently for the upper intermediate cooling zone and the lower cooling zone.

In this case, it is possible to raise the temperature of the gas outlet of the intermediate cooling zone by setting the temperature of the gas inlet of the intermediate cooling zone to high and setting the flow rate to low. Further, by setting the temperature of the gas inlet of the lower cooling zone to be low and setting the flow rate to be large, the reduced iron can be cooled to the desired temperature.

Therefore, in the upper part of the intermediate cooling zone, the high-temperature cooling gas, whose main component is hydrocarbon gas, and the high-temperature reduced iron encounter each other, and the amount of carbon in the reduced iron can be increased in the same manner.

Furthermore, CO₂ is not emitted from hydrogen reduction when hydrogen is used as the reducing gas. Most reactions of hydrocarbons introduced into the cooling zone are hydrocarbon cracking reactions. Since carbon in the hydrocarbons is added to the reduced iron by the cracking reaction, the amount of CO₂ emitted from the reduced iron production facility can be significantly reduced.

Further, in a facility for producing reduced iron by introducing a reducing gas into a vertical reduction furnace, the reformed gas required for the reduction of iron oxide can be produced by mixing oxygen-containing gas, hydrocarbon-containing gas, and the circulating gas in which a part of water as an oxidizing component is removed from the top gas discharged from the vertical reduction furnace and adjusted the water content and introducing it into an auto-thermal reformer (self-thermal reformer).

Therefore, an external heat reformer (reformer) that requires an expensive alloy tube becomes unnecessary, and the initial investment amount can be significantly reduced.

At this time, the inlet gas temperature, outlet gas temperature, and outlet gas reduction degree of the auto-thermal reformer are adjusted within an appropriate range by adjusting the mixing amount of the oxygen-containing gas and the hydrocarbon-containing gas into the first gas mixer.

Further, by mixing a high-concentration oxygen-containing gas instead of an oxidizer such as water or carbon dioxide before introducing the circulating gas into the auto-thermal reformer, there is no need to preheat the circulating gas to a high temperature (for example, 850 °C or above), because the total calorific value of the circulating gas is increased.

Therefore, the preheater does not require an expensive alloy tube. Moreover, problems such as clogging caused by carbon deposition, metal dusting by carburizing, and damage due to high heat load can be solved. Then the frequency of tube replacement is reduced. Accordingly, the initial investment cost can be significantly reduced, and the maintenance cost can be significantly reduced. In addition, the downtime of the direct reduced iron manufacturing equipment related to maintenance can be reduced, and the opportunity loss due to the stopped production of reduced iron can be significantly reduced.

Furthermore, the overall thermal efficiency is improved, and the operating cost is reduced because the heat recovered from the circulating gas and the heat generated by the combustion of a high-concentration oxygen-containing gas such as pure oxygen are used without using an external heating reformer (reformer). The initial investment can be significantly reduced by eliminating the need for combustion equipment such as a blower for reformer combustion, the reformer itself, and its exhaust gas treatment equipment.

In addition, in a standard direct reduced iron production facility, the site area occupied by external heat reformers (reformers), combustion equipment, exhaust gas treatment equipment, and heat recovery equipment from exhaust gas (off-gas preheater) account for about 70% or more of the total process equipment other than utility facility and material handling equipment. Therefore, there is an advantage that the required site area can be reduced to 30% or less since they can be deleted.

In addition, since most of the required reforming is performed by the auto-thermal reformer, it is possible to increase the gas reduction degree at the reduction furnace inlet.

Then the ratio of gas reforming in the reduction furnace (In-situ reforming) can be reduced. Accordingly, it is not required to excessively raise the furnace inlet temperature to maintain the high gas temperature after "In-situ reforming."

Therefore, the temperature at the inlet of the reduction furnace is maintained in a temperature range that does not cause problems such as fine generation, sintering each other and fusion (cluster) of reduced iron in the furnace, and damage to the refractory by the iron fines. Moreover, it becomes possible to maintain a high reduction degree and temperature after reforming in the reduction zone.

Further, when excess CO and H₂ containing gas is generated, it can be effectively used as a chemical raw material, such as a raw material for methanol production, not simply as a fuel for combustion.

On the other hand, if the properties of the iron oxide raw material are good to avoid problems such as fine generation, sintering each other or fusion (cluster) of reduced iron in the furnace, and damage of the refractory due to the iron fines, the following operations can be done. It can raise the gas temperature at the inlet of the reduction furnace by mixing more oxygen-containing gas and hydrocarbon-containing gas with the reformed gas, which is reformed in the above auto-thermal reformer and more reforming reaction (In-situ reforming) in the reduction furnace by the catalytic effect of metallic iron can be performed accordingly. As a result, the reducing gas temperature and the reduction degree after reforming in the furnace rise so that iron oxide can be reduced more efficiently.

In this case, carbon deposition occurs in the reduced iron. However, since no alloy device is used after mixing the hydrocarbon-containing gas, carbon deposition and carburizing problems on the alloy metal surface do not occur.

On the other hand, the carbon deposition reaction on the reduced iron is beneficial because it improves the carbon content of the reduced iron product and is also preferable from the viewpoint of product quality.

In addition, the water content of the circulating gas is adjusted with the gas pressure and temperature on the outlet side of the water conditioner, and most of the CO 2 can be removed with a CO₂ remover. Therefore, the amount of CO₂ components and the water content in the circulating gas can be adjusted. According to the adjustment above, most of the reducing gas production can be performed with oxygen and hydrocarbon gas. As a result, the preheating temperature of the circulating gas required for reforming can be further lowered, and the heat load of the preheater can be further reduced.

Therefore, the preheater can be made cheaper, and the trouble with the preheater can be solved.

In addition, the exhaust gas from the external heat reformer (reformer) is eliminated, and the amount of combustion required by the preheater can be reduced. Furthermore, it can significantly reduce CO₂ emissions from the direct reduction iron facility by effectively utilizing CO₂ removed from the top gas to oil fields.

Further, in the facility for producing a cold direct reduced iron (Cold DRI) by reducing the iron oxide raw material in a vertical reduction furnace and cooling it, when the facility is provided with the above cooling gas system and the above auto-thermal reformer, it has the following advantages. For example, it does not need to use an external heat reformer and can adjust to a desired amount of carbon in the reduced iron without lowering it. And the temperature and the reduction degree of the reducing gas after reforming in the reduction furnace can be kept high while maintaining the temperature at the inlet of the furnace that does not cause a fine generation of direct reduced iron, sintering and fusing (clustering) of reduced iron, and damage to the refractory material due to iron fines. And it can solve the problems of carbon deposition and metal dusting due to the carburization of alloyed parts in an external combustion-type circulation gas preheater (preheater). As a result, a good efficient process is embodied that is inexpensive, highly reliable, and capable of producing reduced iron with high quality.

Further, in a facility for producing cold direct reduced iron (Cold DRI) by reducing an iron oxide raw material in a vertical reduction furnace, the methane is generated by adding hydrogen to at least a part of carbon dioxide recovered by the above CO₂ remover in the facility, and at least a part of the produced methane is used as a hydrocarbon gas for producing reducing gas or as a hydrocarbon gas to be mixed with a cooling gas for cooling reduced iron. Accordingly, it is possible to reuse carbon dioxide in the facility without requiring additional carbon dioxide storing equipment or carbon dioxide utilization equipment.

In addition, problems can be avoided, such as fine generation during hydrogen reduction, temperature drop in the reduction zone, and carbon deficiency in reduced iron when reducing with hydrogen alone, since the reducing gas produced from methane consists of hydrogen and carbon monoxide. As a result, the same reduction reaction as the current situation can be realized. Since carbon is directly added to the reduced iron from carbon monoxide and methane during reduction, hot reduced iron having the desired carbon component can be produced even when the reduced iron is directly discharged hot.

Furthermore, when the carbon dioxide is recovered and mixed with hydrogen to generate methane as much as possible and reused in the system, the amount of carbon component to be supplemented required to produce the reduced iron is equivalent to the amount of carbon brought out of the system, such as carbon in the reduced iron, carbon dissolved in the water system, and carbon component in the exhaust gas. Therefore, it is sufficient to compensate the amount of hydrocarbon gas equal to the amount of carbon discharged outside the system, and a large amount of hydrocarbon gas is not required. Even when hydrogen is supplied as the main raw gas of the reducing gas, it becomes possible to produce direct reduction iron without the problem of hydrogen reduction in the furnace regardless of the hot discharge or cold discharge process by recycling the carbon component in the system.

Furthermore, it is also possible to recover the carbon dioxide emitted in the steelmaking process, which is downstream of the facility, and replenish into the process. In this case, most carbon components will be recycled. As a result, the reduction iron-making method using hydrogen to produce reduced iron having the desired carbon components is embodied.

### BRIEF DESCRIPTION OF DRAWINGS

Fig. 1 is a view explaining the process flow of embodiment 1 of the present disclosure.
Fig. 2 is a view explaining the process flow of embodiment 2, which separated the reduction and cooling zones, of the present disclosure.
Fig. 3 is a view explaining the modified process flow of embodiment 2 of the present disclosure.
Fig. 4 is a view explaining the process flow of embodiment 3, which made the gas loop of the cooling gas into two gas loops, of the present disclosure.
Fig. 5 is a view explaining the process flow of embodiment 4, which mixes CO₂ and hydrogen to generate methane and uses the methane for reducing and cooling the reduced iron, of the present disclosure.

### MODE FOR CARRYING OUT THE DISCLOSURE

Below, the direct-reduced iron production facility and production method of the present disclosure is described with reference to the accompanying drawings.

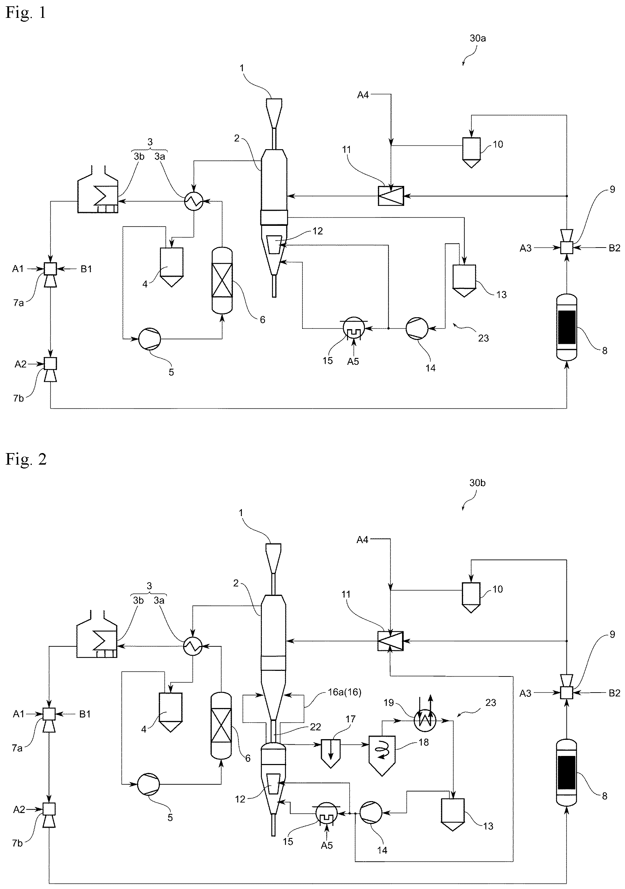

First, the direct reduced iron production facility 30a of the embodiment 1 of the present disclosure is described with reference to Fig. 1.

The direct reduced iron production facility 30a of the embodiment 1 includes a vertical reduction furnace (shaft furnace) 1, a reduction zone 2, a heat exchanger 3, a moisture regulator (top gas scrubber) 4, a circulating gas compressor 5, a CO₂ remover 6, a first gas mixer 7a, a first hydrocarbon-containing gas mixer 7b, an auto-thermal reformer 8, a second gas mixer 9, a reformed gas cooler 10, a reformed gas mixer 11, a cooling zone 12, a cooling gas scrubber 13, a cooling gas compressor 14, a cooling gas aftercooler 15, hydrocarbon-containing gas lines A1, A2, A3, A4, A5, and oxygen-containing gas lines B 1, B2.

The vertical reduction furnace 1 is provided with a reduction zone 2 and a cooling zone 12, and reduces the iron oxide raw material by contacting it with a reducing gas. Heat exchanger 3 consists of a top gas heat recovery heat exchanger 3a and a circulating gas preheater (preheater) 3b. The top gas heat recovery heat exchanger 3a recovers heat from the top gas by exchanging heat between the gas (top gas) discharged after reduction from the reduction furnace 1 and the outlet gas of the CO₂ remover 6 and adjusts the preheating temperature of the circulating gas. The preheater 3b is a preheater to adjust the temperature of the circulating gas further as needed. Heat exchanger 3 is installed between the vertical reduction furnace 1 and the first gas mixing device 7a. Moisture regulator (top gas scrubber) 4 removes dust from the top gas, cools the top gas, removes moisture, and adjusts the moisture content. The circulating gas compressor 5 is a pressurized compressor for circulating and utilizing the top gas. The CO₂ remover 6 removes some or all of the carbon dioxide from the top gas.

The first gas mixer (partial oxygen combustion facility) 7a mixes and partially oxidized and combusts a highly concentrated oxygen-containing gas such as pure oxygen, a hydrocarbon-containing gas, and gas with reduced oxidizing gas components such as water and CO2. The first hydrocarbon-containing gas mixer 7b mixes the hydrocarbon-containing gas. The first gas mixer 7a and the first hydrocarbon-containing gas mixer 7b adjust the inlet temperature, outlet temperature, and outlet gas reduction degree of the auto-thermal reformer 8 by adjusting the amount of oxygen-containing gas B1 and hydrocarbon-containing gases A1, A2 added in the first gas mixer 7a and first hydrocarbon-containing gas mixer 7b. Therefore, the first hydrocarbon-containing gas mixer 7b is provided when the amount of hydrocarbon-containing gas A1 is insufficient in the first gas mixer 7a.

The auto-thermal reformer 8 is a reforming device by the self-energy of mixed gas. The mixed gas is the mixture of hydrocarbon-containing gas A1, A2, the oxygen-containing gas B1, and the gas in which water and carbon dioxide have been removed from the top gas in the first gas mixer 7a and the first hydrocarbon-containing gas mixer 7b. The auto-thermal reformer 8 is preferably arranged in a U-shape or a V-shape. As a result, the used catalyst can be discharged from the lower part, a new catalyst can be filled from the upper part, and the catalyst can be easily replaced. Further, in a preferred configuration of the auto-thermal reformer 8, a similar layer filled with an inert catalyst such as alumina balls or the like capable of removing fine solids such as soot and dust is placed upstream to reduce the frequency of catalyst replacement. Further, the auto-thermal reformer 8 preferably takes a form in which the oxidation reaction and the reforming reaction proceed with one reformer.

The second gas mixer 9 mixes the gas discharged from the auto-thermal reformer 8 with oxygen-containing gas B2 and hydrocarbon-containing gas A3 to oxidize and partially burn the mixed gas. The second gas mixer 9 adjusts the gas temperature and hydrocarbon concentration at the inlet of the vertical reduction furnace 1 and performs the appropriate amount of further reforming in the reduction furnace.

The reformed gas cooler 10 is a device that adjusts the temperature of the gas introduced into the furnace. That can eliminate problems such as the generation of fines in the furnace according to the properties of the raw material, sintering or fusion (clusters) between reduced iron, and damage to refractory materials caused by iron fines. The reformed gas mixer 11 mixes the cooled reforming gas and hydrocarbon-containing gas into the furnace feed gas line.

Furthermore, the direct reduced iron production facility 30a is equipped with a cooling gas loop 23 that circulates the cooling gas in the cooling zone 12 to cool the reduced iron to produce cold direct reduced iron (Cold DRI). The cooling gas loop 23 has a cooling gas scrubber 13, a cooling gas compressor 14, and a cooling gas aftercooler 15. The cooling gas loop 23 has a flow regulator (not shown) for adjusting the cooling gas flow rate to the reduction furnace 1.

Cooling gas scrubber 13 is a water-cooled direct contact cooler that removes dust and cools the cooling gas for cooling the reduced iron discharged from reduction furnace 1. Cooling gas aftercooler 15 is installed on the outlet side of cooling gas compressor 14 and further adjusts the temperature of the cooling gas. For example, the amount of carbon in the reduced iron can be increased by raising the outlet temperature of the cooling gas. The temperature rise of the cooling gas outlet can be done by lowering the inlet temperature of the cooling gas with the cooling gas aftercooler 15 and reducing the total flow rate of the cooling gas with the flow rate regulator. The cooling gas aftercooler 15 is preferably a chiller type aftercooler or an aftercooler supplying a low-temperature cooling gas to the reduction furnace by introducing a cold hydrocarbon-containing gas cooled by its adiabatic expansion heat. The temperature of the cooling gas at the outlet of the cooling gas aftercooler 15 is preferable to be able to cool to +3 to 4 °C lower than the wet-bulb atmospheric temperature or less.

The details of the embodiment 1 are described below.

In the direct reduced iron production facility 30a equipped with the equipment mentioned above, direct reduced iron is produced by bringing the iron oxide raw material into contact with the reducing gas in the vertical reduction furnace 1. After reducing the iron oxide raw materials, which are charged from the upper part of the vertical reduction furnace 1, the gas is discharged from the top of the furnace as the top gas.

This top gas is dust-removed and cooled by the top gas scrubber 4. Most moisture is removed and adjusted (moisture adjustment process), and the gas is pressurized by the circulating gas compressor 5. Moreover, CO₂ is removed by the CO₂ remover 6 (CO₂ removal process), the CO₂ component is also adjusted, and the total oxidizing gas component amount is adjusted.

The outlet gas temperature is controlled by adjusting the supply water amount and temperature to the top gas scrubber 4. The saturated water vapor pressure is controlled by adjusting the outlet pressure of the top gas scrubber 4, and these adjustments can control the water content in the circulating gas.

The CO₂ remover 6 may be a PSA (pressure swing adsorption) device or a chemical absorption method. In either case, to achieve the target CO₂ removal rate, it may be necessary to pressurize the gas once, remove the CO₂, and then reduce the pressure. In this case, it is even better to use a rotary depressurizing device and physically connect the shaft with that of the circulating gas compressor 5 to reduce the required power.

The oxidation component is adjusted by removing water (H₂O) and carbon dioxide (CO₂) so that the main gas components are CO and Hz. It is introduced to the top gas heat recovery heat exchanger 3a and the preheater 3b as needed (preheating process). After preheating, the gas is mixed, partially oxidized, and burned with a high-concentration oxygen-containing gas B1 and a hydrocarbon-containing gas A1 in the first gas mixing device 7a (first gas mixing process). A high-concentration oxygen-containing gas B1 has a higher oxygen concentration than the atmospheric oxygen concentration, such as pure oxygen. A hydrocarbon-containing gas A1 is such as natural gas.

As a result, a mixed gas of the oxidizing gas of H₂O and CO₂, the reducing gas of hydrogen (H₂) and carbon monoxide (CO), and the hydrocarbon gas, is produced. The oxidation reaction heat raises the temperature of the mixed gas.

A required amount of the hydrocarbon-containing gas A2 is further mixed with the high-temperature mixed gas in the first hydrocarbon-containing gas mixer 7b. The mixed gas is introduced into the auto-thermal reformer 8 and reforms the hydrocarbon and the oxidizing gas with its own energy. It produces reducing gas with a high reduction degree (a reformed gas producing process).

Here, the preheating temperature of the circulating gas, the amount of the high-concentration oxygen-containing gas B1 to be mixed, and the amount of the hydrocarbon-containing gases A1, A2 are to be determined according to the following conditions. For example, the amount of the reformed gas required for the reduction of the iron oxide raw material, the reduction degree and the temperature of the reformed gas, and the temperature at the inlet and outlet of the auto-thermal reformer 8.

For example, when a large amount of reduction gas into the reduction furnace is required, the preheating temperature of the circulating gas in preheater 3b is set low. The oxygen-containing gas B1 is mixed to the upper limit of the temperature of the auto-thermal reformer 8. At the same time, the hydrocarbon-containing gases A1, A2 are mixed, corresponding to the above. As a result, a larger amount of reducing gas can be produced.

On the contrary, reducing the amount of reduction gas input to the reduction furnace is sometimes desired to reduce the excess top gas. In this case, the preheating temperature of the circulating gas is set to as high as possible within the range where the high temperature does not cause the problem due to carbon deposition and carburizing in the top gas heat recovery heat exchanger 3a and preheater 3b. For example, the range is below 850 °C, preferably less than 700 °C, and more preferably less than 550 °C. In this case, the oxygen amount to be added is reduced, and newly produced reducing gas is decreased accordingly.

Further, in the first gas mixer 7a, a hydrocarbon-containing gas A1 and a high-concentration oxygen-containing gas B1 are mixed with the top gas and partially combusted at a ratio within a range that does not generate soot. Further, the hydrocarbon-containing gas A2 is mixed in the first hydrocarbon-containing gas mixer 7b as necessary, and the temperature of the gas at the inlet of the auto-thermal reformer 8 is adjusted to an allowable temperature, for example, 1500 °C or lower, preferably 1400 °C or lower.

In this control, the outlet temperature of the auto-thermal reformer 8 is also controlled by adjusting the hydrocarbon-containing gases A1, A2 and the high-concentration oxygen-containing gas B 1. This controlled temperature is 700 °C or higher, preferably 750 °C or higher, more preferably 800 °C or higher within the range so that carbon deposition does not occur in the auto-thermal reformer 8.

Suppose the reduction degree of the reforming gas at the outlet of the auto-thermal reformer 8 cannot satisfy the predetermined reduction degree, for example,7 or more, preferably 8 or more, under the condition above. In that case, the first gas mixer 7a, the first hydrocarbon-containing gas mixier 7b, and the auto-thermal reformer 8 are multi-staged. In this case, the gas whose outlet temperature has dropped due to the reforming reaction in the first stage auto-thermal reformer is mixed with the high-concentration oxygen-containing gas and the hydrocarbon-containing gas again. The mixed gas is introduced into the next auto-thermal reformer. The operation above is repeated until the reduction degree of the outlet gas from the last auto-thermal reformer can be adjusted so that the reduction degree and temperature of the inlet gas to the vertical reduction furnace 1 become desired.

Moreover, carbon deposition and carburizing reactions depend on the H₂O, CO₂ concentration in the circulating gas, gas pressure, and temperature. Therefore, the problems of carbon deposition and carburizing on the top gas heat recovery heat exchanger 3a and the preheater 3b and carbon deposition of the auto-thermal reformer 8 can be solved by adjusting those to an appropriate range.

For example, the pressure and temperature of the outlet gas of the top gas scrubber 4 are adjusted to control the moisture contents. Alternatively, an additional direct water-cooled cooler may be provided at the outlet of the circulating gas compressor 5 to adjust the moisture contents. The CO₂ concentration is adjusted with a CO₂ remover. Further, the gas pressure adjusts the outlet pressure of the top gas scrubber 4 by adjusting the amount of gas discharged outside the system. By adjusting the outlet pressure of the top gas scrubber 4, the inlet pressure of the auto-thermal reformer 8 is adjusted to an appropriate pressure. Further, the preheating temperature of the gas is raised to the desired temperature within a range where carbon deposition does not occur. For example, a top gas heat recovery heat exchanger 3a is recovering a certain amount of heat from the top gas, and an external combustion type preheater 3b increases the gas temperature by adjusting the combustion amount to the desired temperature.

When the gas introduced into the auto-thermal reformer 8 has a pressure of 600 kPa (A) or more, carbon is easily deposited on the catalyst of the auto-thermal reformer 8 unless a large amount of excess oxidizing gas is present. In other words, obtaining a reformed gas with a predetermined reduction degree is impossible without the carbon deposition problem when gas pressure is 600 kPa (A) or more.

Therefore, the pressure of the gas to be introduced into the auto-thermal reformer 8 is adjusted to less than 600 kPa (A), preferably less than 500 kPa (A), more preferably less than 350 kPa (A) in the direct reduced iron production facility 30a of the embodiment 1 of the present disclosure so that it can prevent carbon deposition in the auto-thermal reformer 8 and obtain a reduced gas having a desired reduction degree.

In the above description, the case where the first gas mixing device 7a, the first hydrocarbon-containing gas mixing device 7b, and the auto-thermal reformer 8 are separately installed has been described, but the present discloser is not limited to this. In the case of the auto-thermal reformer 8, in which the oxidation reaction and the reforming reaction can be performed, it is not necessary to mix the hydrocarbon-containing gas A1, A2 in the first gas mixer 7a and in the first hydrocarbon-containing gas mixer 7b, respectively. The required amounts of the high-concentration oxygen-containing gas B1 and the hydrocarbon-containing gas A1, A2 may all be mixed in the auto-thermal reformer 8.

In this case, the inlet temperature of auto-thermal reformer 8 also drops so that a wide range of adjustments are possible.

The reformed gas produced under the above conditions is mixed with the high-concentration oxygen-containing gas B2 and the hydrocarbon-containing gas A3 in the second gas mixer 9 (second gas mixing process) so that the inlet gas temperature of the furnace is raised. The hydrocarbon-containing gas A4 is further mixed downstream, and reforming (In-situ reforming) in the furnace occurs by the catalytic effect of the metallic iron. As a result, it makes it possible further to increase the reduction degree of gas in the furnace and to carry out the reduction reaction of iron oxide at a high temperature.

In addition, it is even better if the reformed gas mixer 11 is equipped and the hydrocarbon-contained gas A4 can be further mixed to accelerate the reforming reaction in the furnace and to avoid partial high temperature in the furnace due to the exothermic methanation reaction.

Further, even if the gas temperature at the inlet of the vertical reduction furnace 1 is around 1000 °C, the reduced irons are fused and form clusters and generate fines when the reformed gas is introduced into the reduction furnace 1, depending on the raw material, and it causes a problem that a discharge of the reduced iron become difficult. In this case, the reformed gas cooler 10 may be provided to control the temperature.

On the other hand, when the raw material has excellent cluster resistance characteristics, the amount of the high-concentration oxygen-containing gas B2 and the hydrocarbon-containing gas A3 to the second gas mixer 9 can be increased to increase the partial combustion amount of oxygen and the amount of hydrocarbon gas. It increases the furnace's temperature and promotes the reforming (In-situ reforming).

In this case, if the amount of the hydrocarbon-containing gas A4 to the reforming gas mixer 11 is increased and the concentration of the hydrocarbon gas in the reducing gas (furnace introduction gas) introduced into the reduction furnace 1 is increased, the reforming reaction is accelerated, and the carbon deposition reaction is promoted at the same time. Therefore, the carbon concentration of the reduced iron can be improved by the carbon deposition reaction.

At this time, a carbon deposition reaction is involved in the reduced iron, but since no equipment uses an alloy after mixing the hydrocarbon-containing gas A4, problems such as carbon deposition and damage to the equipment due to carburizing do not occur. It is also preferable from the product quality viewpoint because the reduced iron's carbon content increases.

However, when the pressure of the reducing gas is low as it is in the embodiment 1, the partial pressure of the hydrocarbon gas, which is required for the reforming reaction in the reduction furnace, is low too. In addition, mixing excess hydrocarbon gas is not preferable to maintaining high productivity. Therefore, since the partial pressure of hydrocarbons is low, the carbon deposition reaction on the reduced iron in the reduction zone 2 is unlikely to occur, and the carbon content in the reduced iron on the exit of the reduction zone 2 stays to the extent approximately 1.5% to 2%.

On the other hand, the amount of carbon added in cooling zone 12 can be adjusted by the embodiment 1 without being largely dependent on conditions in reduction zone 2 as described above. Therefore, the amount of carbon added to the discharged reduced iron can be adjusted by the following mechanism.

The main reaction of the carbon deposition reaction in the vertical reduction furnace 1 is the cracking reaction of hydrocarbons, which largely depends on the partial pressure of the hydrocarbon gas and the temperature.

In the embodiment 1, the cooling gas discharged from the cooling zone 12 of the reduction furnace 1 is dust-removed and cooled by the cooling gas scrubber (direct contact type water-cooled cooling gas cooler) 13 by the cooling gas loop 23. The pressure is increased by the gas compressor 14, then some of the gas is directly introduced, and some other gas is further cooled by the cooling gas aftercooler 15 and introduced into the cooling zone 12.

Here, to bring the gas having a high hydrocarbon gas partial pressure into contact with the reduced iron at a high temperature, the hydrocarbon concentration of the circulating cooling gas is set to 50% or more, preferably 70% or more. The cooling gas aftercooler 15, preferably a chiller type aftercooler, or an aftercooler that introduces a hydrocarbon-containing gas cooled by its adiabatic expansion or the like to supply a low-temperature cooling gas to the reduction furnace is placed on the outlet side of the cooling gas compressor 14.

In a normal Cold DRI production facility, the flow rate of cooling gas is adjusted so that the discharge temperature of reduced iron is 50 °C to 55 °C or less to prevent troubles due to reoxidation of reduced iron.

However, the inlet temperature of the cooling gas of the reduction furnace 1 is about 40 °C due to the increase in the pressure even when the water spray cooling type cooling gas compressor 14 is used. As described above, since the temperature difference between the cooling gas and the controlled discharge temperature of the reduced iron is small, a large amount of cooling gas is required, and the discharge temperature of the cooling gas from the reduction furnace is inevitably lowered to about 400 °C.

As described above, it is controlled so that the main component of the cooling gas is a hydrocarbon, and the partial pressure of the hydrocarbon gas in contact with the reduced iron is made as high as possible. However, if the gas temperature is about 400 °C, the reduced iron is cooled down when it contacts with the high-temperature reduced iron, and the cracking reaction of the hydrocarbon gas cannot sufficiently occur.

Further, even if a part of this cooling gas is introduced up to the reduction zone 2, the gas having a low temperature always flows through the center of the reduction furnace so that the temperature does not reach a sufficiently high temperature to cause a carbon deposition reaction. It causes not only stagnation of the carbon deposition reaction but also causes stagnation of the reduction reaction.

On the other hand, in the embodiment 1, a large temperature difference between the cooling gas and the desired reduced iron discharge temperature (usually about 50 °C to 55 °C or less) can be obtained by providing an aftercooler for cooling and lowering the inlet cooling gas temperature to the reduction furnace 1. Because the cooling gas aftercooler 15, preferably a chiller type aftercooler or an aftercooler with a cold hydrocarbon-containing gas cooled by its adiabatic expansion on the outlet side of the cooling gas compressor 14 is placed and can cool further, at least a part of the cooling gas. Therefore, the reduced iron can be cooled to the desired discharge temperature by a small cooling gas flow. The inlet temperature of the cooling gas to the reduction furnace 1 is preferably 35 °C. or lower.

In this case, the cooling gas's total heat capacity decreases as the cooling gas's total flow rate required to cool the reduced iron decreases, so the temperature on the outlet side of cooling zone 12 inevitably increases.

Therefore, in the embodiment 1, the high-temperature cooling gas comes into contact with the reduced iron at the upper part of the cooling zone 12. Since the partial pressure of the hydrocarbon gas is high and the temperature is high in this portion, the cracking reaction of the hydrocarbon gas is promoted, and the amount of carbon in the reduced iron can be increased. The moisture content in the cooling gas is also reduced by cooling, which prevents carbon consumption in the reduced iron by the water-carbon reaction. In addition, since the cooling gas outlet temperature becomes high, efficient heat recovery from the cooling gas becomes possible if the cooling gas loop 23 is provided with, for example, a heat recovery device such as a boiler.

That is, the problems of carbon deposition in the external combustion type circulating gas preheater (preheater), carburizing on ferroalloy, and metal dusting are avoided. At the same time, it is possible to adjust the amount of carbon in the reduced iron to, for example, 3% or more by adjusting the inlet temperature and flow rate of the cooling gas. Such carbon adjustment can be realized even if the temperature at the inlet of the reduction furnace is maintained in a temperature range that does not cause problems such as fine generation in the furnace, sintering each other and fusion (cluster) of reduced iron, and damage to the refractory by the iron fines.

After this, an example of the production conditions for the direct reduced iron in the embodiment 1 is shown.

The preheating temperature of the circulating gas is set at about 450 °C, the outlet pressure of the top gas scrubber 4 is set at 50 kPa (A), the outlet temperature is set at 45 °C, and the amount of water in the circulating gas is adjusted. And a dry type of process gas compressor 5 is used and controls the pressure of the gas introduced to the auto-thermal reformer 8 to about 250 kPa (A) to 350 kPa (A) after removing CO₂ via the CO₂ remover.

In the first gas mixer 7a and the first hydrocarbon-containing gas mixer 7b, the hydrocarbon-containing gas A1, the highly oxygenated gas B1, and the hydrocarbon-containing gas A2 are mixed and partially combusted so that the R-value of the reformed gas at the outlet of the auto-thermal reformer 8 is about 10. At this time, the inlet temperature of the auto-thermal reformer 8 becomes less than 1500 °C, and the outlet gas temperature is about 950 °C. At this time, the hydrocarbon gas ratio (CO₂ + H₂O) / CH₄ of the oxidizing substance on the outlet side of the auto-thermal reformer 8 can be maintained at a ratio that does not cause carbon deposition on the catalyst.

Further, when the hydrocarbon-containing gas A3 and the high-concentration oxygen-containing gas B2 are added to the second gas mixer 9, and the mixed gas at about 920 °C is introduced into the reduction furnace 1, they are reformed in the furnace (In-situ reforming), and a carbon deposition reaction occurs. Moreover, the gas after the In-situ reforming and the carbon deposition reaction can obtain a good quality reducing gas having a temperature of about 780 °C and a reduction degree of about 13.

Under the conditions given in the above example, the concentration of hydrocarbon gas in the introducing gas to the furnace is enough to be about 5 to 8% or less. Since a large amount of excess hydrocarbon-containing gas is not required, the unit flow rate of gas introduced into the furnace per reduced iron can be smaller than that in high-pressure operation. Accordingly, the pressure loss in the reduction furnace 1 is almost the same as that at a circulating gas pressure of 700 kPa (A) or higher, and one of the disadvantages of the low-pressure gas operation is not remarkable in terms of pressure loss.

Productivity, that is, the required reduction reaction time depends more on temperature than pressure, so not lowering the temperature of the reducing gas after In-situ reforming and carbon deposition reaction greatly contributes to the reduction reaction rate, that is, high productivity.

Under the production conditions described above, most of the reforming reactions are completed in advance by the auto-thermal reformer 8, so that the temperature drop due to the In-situ reforming is small and the temperature of the gas after the reforming and carbon deposition reaction is high, which will be about 780 °C.

On the other hand, when most of the reforming reaction is carried out in the furnace (In-situ reforming) under high-pressure conditions, the endothermic reaction significantly lowers the gas temperature in the furnace and the productivity.

Therefore, a larger vertical reduction furnace is required despite the high-pressure operation, and its size cannot be significantly reduced compared to this invention, and the benefits of reducing the equipment size can be enjoyed, which is an advantage of high-pressure gas operation.

In addition, the carbon content in the product under this invention can be adjusted in the cooling zone 12.

In this example, the average temperature of the total amount of cooling gas is adjusted to 35 °C or lower, preferably 25 °C or lower, by the chiller-type cooling gas aftercooler 15. The discharge temperature of the reduced iron becomes the desired temperature, for example, 50 °C or lower, by adjusting the amount of cooling gas.

In the case above, the difference between the discharged iron temperature (usually about 50 °C) and the inlet temperature of the cooling gas reduction furnace 1 can be 25 °C. That is more than twice the average temperature difference of 10 °C when the cooling gas temperature is about 40 °C.

Therefore, the required amount of cooling gas is significantly reduced, the temperature at the outlet of the reduction furnace of the cooling gas rises, and the amount of carbon in the reduced iron can be adjusted to 3% or more.

As described above, as shown in this example, the embodiment 1 is better than the condition of high-pressure gas from a comprehensive viewpoint of the carbon deposition problem, the pressure loss in the furnace, fluidization phenomenon in the furnace, productivity, reliability of equipment, equipment size, and product quality.

Next, the direct reduced iron production facility 30b of another embodiment 2 of the present invention is described with reference to Fig. 2.

The direct reduced iron production facility 30b of the embodiment 2 is the same as the direct reduced iron production facility 30a of the embodiment 1 with the vertical reducing furnace (shaft furnace) 1, reducing zone 2, heat exchanger 3, moisture regulator (top gas scrubber) 4, circulating gas compressor 5, CO₂ remover 6, first gas mixer 7a, first hydrocarbon-containing gas mixer 7b, auto-thermal reformer 8, second gas mixer 9, reformed gas cooler 10, reformed gas mixer 11, cooling zone 12, cooling gas scrubber (direct contact type water-cooled cooling gas cooler) 13, cooling gas compressor 14, cooling gas aftercooler 15, hydrocarbon-containing gas line A1, A2, A3, A4, A5, and oxygen-containing gas lines B1, B2. Further, heat exchanger 3 comprises a top gas heat recovery heat exchanger 3a and a circulating gas preheater (preheater) 3b. The description is omitted for the same configurations as the embodiment 1 by designating the same reference numerals.

The direct reduced iron production facility 30b of the embodiment 2 is configured with the reduction zone 2 and the cooling zone 12 as separate furnaces independently of each other so that the desired high-temperature cooling gas can be extracted and introduced into the reduction zone 2. The reduction zone 2 and the cooling zone 12 are connected by a chute 22 that transfers the reduced iron into the cooling zone 12.

Further, to produce the cooled direct reduced iron (Cold DRI), the direct reduced iron production facility 30b is provided with a cooling gas loop 23 that circulates a cooling gas that cools the reduced iron in cooling zone 12. The cooling gas loop 23 includes cooling gas dust removers 17, 18 and a cooling gas heat exchanger (boiler) 19 to recover heat from the cooling gas and cool the cooling gas. The cooling gas dust removers 17, 18 are configured as dry dust collectors.

By dividing the reduction zone 2 and the cooling zone 12 into separate furnaces as in the embodiment 2, it is possible to easily construct all the ducts connecting the reduction furnace 1 and the upper part of the cooling zone 12 with refractory materials so that high-temperature cooling gas can be extracted without causing equipment problems.

Since the preheated cooling gas to a high temperature, whose main component is a hydrocarbon, brings into contact with the reduced metallic iron as described above, the carbon content of the reduced iron can be easily improved.

Further, when the cooling gas is introduced into reduction zone 2 as an upward flow in the furnace, it is heated in the lower region of reduction zone 2 and heated to almost the same temperature as the reduced iron so that the carbon content of the reduced iron can be further increased regardless of the gas pressure around.

Further, since the cooling gas introduced into reduction zone 2 is sufficiently heated, the cooling effect due to the upward flow of the cooling gas in reduction zone 2 is eliminated, and the reduction stagnation does not occur in reduction zone 2.

In addition, since there is sufficient residence time in the lower part of the reduction zone 2, sufficient carburizing can be expected from the viewpoint of reaction time.

Moreover, the heat recovery efficiency is improved when heat is recovered from the cooling gas by increasing the outlet temperature of the cooling gas. For example, heat may be recovered by boiler 19 via dry dust collectors 17, 18, and power generation may be performed. In this case, since the steam temperature can be heated to a high level, the power generation efficiency is dramatically improved. Further, instead of boiler 19, a circulating gas or a hydrocarbon-containing gas may be preheated.

On the other hand, if the cooling gas is introduced from the cooling zone to the reduction zone through the direct reduction iron transfer chute, it causes a problem of poor descending of the reducing iron and equipment damage due to the vibration of the chute.

However, in the direct reduced iron production facility 30b of the embodiment 2, a gas duct for reduction zone 16a (cooling gas connecting duct) is provided separately from a chute 22, which connects the reducing zone 2 and the cooling zone 12 and transfers the reduced iron. The gas duct for reduction zone 16a connects the upper part of cooling zone 12 and the lower part of reduction zone 2. In the embodiment 2, the gas duct for reduction zone 16a constitutes the gas duct (cooling gas connecting duct) 16.

Accordingly, most of the cooling gas can be introduced into reduction zone 2 via the gas duct for reduction zone 16a without inhibiting the descending of the reduced iron. That is, the amount of cooling gas introduced from the cooling zone 12 into the reduction zone 2 directly is not limited due to a poor descending of reduced iron or the like and can be adjusted by the amount of the hydrocarbon-containing gas A5 introduced into the cooling gas loop 23.

As a result, in the embodiment 2, the amount of carbon in the reduced iron can be increased without causing the reduction stagnation in reduction zone 2 by guiding the sufficiently preheated cooling gas to the reduction zone 2 as needed. A stable operation can be maintained without hindering the descending of reduced iron, and the total thermal efficiency can also be improved.

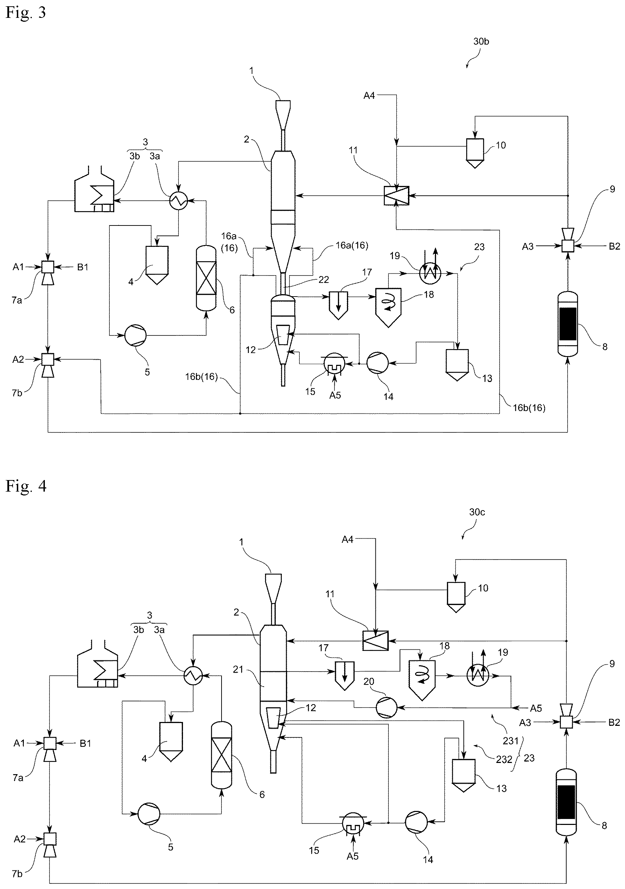

Next, the direct reduced iron manufacturing facility 30b of the modified example of the embodiment 2 is described with reference to Fig. 3. In this modification, the cooling gas connecting duct 16 is composed of a gas duct for a reduction zone 16a and a gas duct for a circulating gas line 16b that returns a part of the cooling gas extracted from the cooling zone 12 to the circulating gas line. The gas duct for the circulating gas line 16b is connected with the circulating gas line and the cooling zone 12 or the cooling gas loop 23. Specifically, the gas duct for the circulating gas line 16b is branched from the gas duct for the reduction zone 16a and is connected downstream of the auto-thermal reformer 8, for example, to the reforming gas mixer 11 and/or upstream of the auto-thermal reformer 8, for example, to the first hydrocarbon-containing gas mixer7b. As a result, a part of the cooling gas is returned downstream of the auto-thermal reformer 8, for example, the reforming gas mixer 11, and/or upstream of the auto-thermal reformer 8, for example, the first hydrocarbon-containing gas mixer 7b and mixed with the reducing gas introduced into the reduction furnace 1 and/or the gas flowing upstream of the auto-thermal reformer 8.

As described above, the preheated cooling gas may be used as a part or a substitute for the hydrocarbon-containing gases A2, A4 by returning the preheated cooling gas to the circulating gas line without cooling it. As a result, when the supply lines for the hydrocarbon-containing gases A2, A4 become unnecessary, the supply lines for the hydrocarbon-containing gases A2, A4 may be eliminated. Further, it is not necessary to provide the first hydrocarbon-containing gas mixer 7b or the like when the gas duct for the circulating gas line 16b is directly connected to the circulating gas line.

Moreover, the gas duct for the circulating gas line 16b can take any form as long as the cooling gas discharged from the reduction furnace 1 can be returned to the circulating gas line without going through the direct contact type water-cooled cooling gas cooler 13. For example, the cooling gas after removing dust by the cooling gas dust removers 17, 18 may be mixed from upstream of the cooling gas scrubber 13 into the reducing gas that introduces into the reduction furnace 1 and/or the gas that flows upstream of the auto-thermal reformer 8 as described above. In this case, installing a new dust remover is unnecessary because the dust has already been removed.

By providing the gas duct for the circulating gas line 16b in this way, the hydrocarbon-containing gas required for reduction can be obtained from the preheated cooling gas. Accordingly, it is not necessary to separately install a preheater for preheating the hydrocarbon-containing gas, and it is possible to reduce the equipment cost of the external preheater for the hydrocarbon-containing gas.

If most cooling gas is introduced directly into reduction zone 2 or the circulating gas line (reduction furnace input gas (reduction gas) and/or circulating gas) without being directly cooled by water, the amount of circulating cooling gas extracted from cooling zone 12, cooled, and then introduced into cooling zone 12 again is significantly reduced.

Therefore, most cooling gas through the cooling zone 12 becomes the newly introduced hydrocarbon-containing gas A5. As a result, the size of the cooling gas compressor 14 that pressurizes the circulating cooling gas can be reduced when the pressure of the hydrocarbon-containing gas A5 is high and introduced from the outlet of the cooling gas compressor 14. The required power is also reduced, and water consumption can be reduced since the amount of cooling gas to be cooled is reduced.

Furthermore, the hydrocarbon concentration in the circulating cooling gas can be improved, and the amount of carbon in the reduced iron can be improved.

According to the method above, the temperature at the inlet of cooling zone 12 depends on the temperature of the newly introduced hydrocarbon-containing gas A5. There is also an effect of lowering the temperature at the inlet of the cooling zone 12 by adiabatic expansion by depressurizing and mixing this high-pressure natural gas since this hydrocarbon-containing gas A5 is supplied at high pressure from the natural gas supply station in most cases.

Next, the direct reduced iron production facility 30c, according to another embodiment 3 of the present invention, is described with reference to Fig. 4.

The direct reduced iron production facility 30c of the embodiment 3 is the same as the direct reduced iron production facilities 30a, 30b of the embodiment 1 and embodiment 2 with the vertical reducing furnace (shaft furnace) 1, reduction zone 2, heat exchanger 3, moisture regulator (top gas scrubber) 4, circulating gas compressor 5, CO₂ remover 6, first gas mixer 7a, first hydrocarbon-containing gas mixer 7b, auto-thermal reformer 8, second gas mixer 9, reformed gas cooler 10, reformed gas mixer 11, cooling zone 12, cooling gas scrubber (direct contact type water-cooled cooling gas cooler) 13, cooling gas compressor 14, cooling gas aftercooler 15, hydrocarbon-containing gas lines A1, A2, A3, A4, A5, and oxygen-containing gas lines B1, B2 are provided. Further, heat exchanger 3 comprises a top gas heat recovery heat exchanger 3a and a circulating gas preheater (preheater) 3b. The description is omitted for the same configurations as the embodiment 1 and embodiment 2 by designating the same reference numerals.

Cooling zone 12 in the embodiment 3 is another form of the embodiment 2. Specifically, the configuration is similar to the reduction furnace 1 of the embodiment 1. However, an intermediate cooling zone 21 is provided between the reduction zone 2 and the cooling zone 12 even though the reduction zone 2 and the cooling zone 12 are integrated.

Further, in the embodiment 3, the direct reduced iron production facility 30c is equipped with cooling gas loop 23 in cooling zone 12 and the intermediate cooling zone 21 that circulates a cooling gas for cooling the reduced iron to produce the cold direct reduced iron (Cold DRI). Cooling gas loops 23 for circulation are provided in each intermediate cooling zone 21 and cooling zone 12, respectively. Specifically, the cooling gas loop 23 has an upper cooling gas loop 231 and a lower cooling gas loop 232, an upper cooling gas loop 231 is provided in the intermediate cooling zone 21, and a lower cooling gas loop 232 is provided in a cooling zone 12.

The upper cooling gas loop 231 has the cooling gas dust removers 17, 18, which remove the dust from the cooling gas discharged from the intermediate cooling zone 21, the cooling gas heat exchanger (boiler) 19, which cools the cooling gas, and an intermediate cooling gas compressor 20 to pressurize the cooling gas.

The intermediate cooling gas compressor 20 is configured as a dry-type compressor. The cooling gas discharged from the intermediate cooling zone 21 is dust-removed by the cooling gas dust removers 17, 18. Then heat is recovered by the cooling gas heat exchanger 19, and the gas is cooled. After cooling, the gas is pressurized by the intermediate cooling gas compressor 20 and introduced into the intermediate cooling zone 21.

This upper cooling gas loop 231 is used as a high-temperature gas loop. For example, the temperature of the cooling gas at the cooling gas inlet of the reduction furnace 1 is set to about 150 °C to 200 °C, and the cooling gas flow rate is adjusted so that the temperature of the cooling gas at the cooling gas outlet of the reduction furnace 1 is, for example, around 700 °C which is close to the temperature of the reduced iron just after reduction. As a result, the advantages of the high-temperature cooling gas can be enjoyed as in the case where the reduction zone 2 and the cooling zone 12 are divided into separate furnaces.

Here, equipment made of metal alloy becomes unnecessary, and problems such as carburizing and metal dusting in the equipment do not occur by making the extraction part of the cooling gas a refractory structure.

The lower cooling gas loop 232 includes a cooling gas scrubber 13, a cooling gas compressor 14, and a cooling gas aftercooler 15 same as those in the embodiment 1. The cooling gas discharged from the cooling zone 12 is dust-removed and cooled by the cooling gas scrubber 13, pressurized by the cooling gas compressor 14, and then cooled by the cooling gas aftercooler 15 and introduced into the cooling zone 12.

The lower cooling gas loop 232 is a low-temperature gas loop whose temperature is lower than the cooling gas of the upper cooling gas loop 231 and controls the discharge temperature of reduced iron to the desired temperature. At this time, since the reduced iron has already been cooled in the intermediate cooling zone 21, it can be cooled to the desired temperature with a flow rate of a small amount of cooling gas as compared with the case where the intermediate cooling zone 21 is not provided.

An aftercooler 15, preferably a chiller type aftercooler, or an aftercooler that introduces a hydrocarbon-containing gas cooled by its adiabatic expansion to supply a low-temperature cooling gas to the reduction furnace is installed on the outlet side of the cooling gas compressor 14. Doing so will further reduce the required flow rate to cool the direct reduced iron to the desired temperature.

In this way, by adjusting the temperature and flow rate of each of the upper cooling gas loop 231 and the lower cooling gas loop 232, the discharge temperature of the reduced iron and the carbon amount of the reduced iron can be arbitrarily controlled as in the previous embodiment.

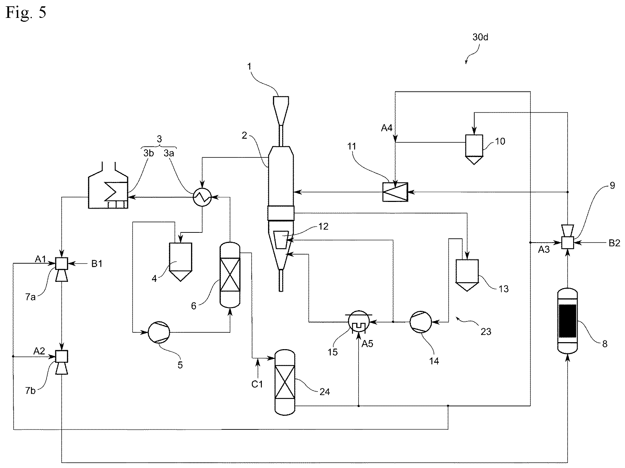

Next, the direct reduced iron production facility 30d, according to another embodiment 4 of the present invention, will be described with reference to Fig. 5.

The direct reduced iron production facility 30d of the embodiment 4 is the same as the direct reduced iron production facility 30a of the embodiment 1 with vertical reduction furnace (shaft furnace) 1, reduction zone 2, heat exchanger 3, moisture regulator (top gas scrubber) 4, circulating gas compressor 5, CO₂ remover 6, first gas mixer 7a, first hydrocarbon-containing gas mixer 7b, auto-thermal reformer 8, second gas mixer 9, reformed gas cooler 10, reformed gas mixer 11, cooling zone 12, cooling gas scrubber (direct contact type water-cooled cooling gas cooler) 13, cooling gas compressor 14, cooling gas aftercooler 15, hydrocarbon-containing gas lines A1, A2, A3, A4, A5, and oxygen-containing gas lines B1, B2 are provided. Further, heat exchanger 3 comprises a top gas heat recovery heat exchanger 3a and a circulating gas preheater (preheater) 3b. The description is omitted for the same configurations as the embodiment 1 by designating the same reference numerals.

Further, the direct reduced iron production facility 30d of the embodiment 4 is provided with a methane generator 24 downstream of the CO₂ remover 6. A gas containing CO₂ as a main component (not shown in Fig. 1) separated and removed by the CO₂ remover 6, and a hydrogen-containing gas C1 containing hydrogen as the main component, which is separately produced, are introduced into the methane generator 24. Then, a gas containing CO₂ as a main component and a gas containing hydrogen as the main component C1 are mixed in the methane generator 24 to generate methane.

The methane-based gas produced by the methane generator 24 is mixed with the hydrocarbon-containing gases A1, A2, A3, A4, A5 required in the reduced iron production facility 30d and used as at least part of the hydrocarbon-containing gas.

In the embodiment 4, the carbon monoxide introduced into the reduction furnace 2 produces carbon dioxide by reducing iron oxide, and most of the carbon dioxide contained in the circulating gas is separated by the CO₂ remover 6.

The separated gas containing carbon dioxide as the main component is mixed with a separately produced hydrogen-containing gas C1 containing hydrogen as the main component, and methane is produced by the following reaction or the like under a catalyst in the methane generator 24.

COz + 4H₂ = CH₄ + 2H₂O

In this way, carbon contents can be recycled except for the amount of carbon discharged outside of the system as the carbon contained in the reduced iron mainly and a small amount of carbon contained in the exhausted gas and dissolved and degassed in the cooling water system by the following sequences generate the carbon monoxide from the hydrocarbon by the reforming reaction, produce the carbon dioxide by the reducing reaction between the carbon monoxide and iron oxide, regenerate methane (CH 4 ) with the hydrogen-containing gas C1 containing hydrogen as the main component with the carbon dioxide, and recycle and reform the methane as hydrocarbon-containing gases A1, A2, A3, A4, A5 required in the direct reduced iron production facility 30d.

As mentioned above, most consumed carbon components are carried out as carbon in the reduced iron. So it is possible to reduce iron oxide by supplementing with a small amount of hydrocarbon gas containing almost the same amount of carbon as that in the reduced iron without carbon dioxide emissions.

Furthermore, most carbon can be recycled by recovering carbon dioxide generated by decarburization in the steelmaking process and mixing it with hydrogen to generate methane.

By recycling carbon as described above, hydrogen is the main reducing agent introduced into the reduced iron production facility 30d. On the other hand, the reduction reaction of iron oxide is carried out by carbon monoxide and hydrogen, which is produced by the methane generating reaction by hydrogen and carbon dioxide, and the reforming reaction of the methane and oxygen, as mentioned above. Therefore, the same reduction using a hydrocarbon as the current operation is possible, and various problems caused by hydrogen reduction are solved. In addition, various problems in the downstream process due to lack of carbon components are also solved because the required carbon is kept in the direct reduced iron even if the reduced iron is discharged in a hot state since carburizing of reduced iron does not depend on the cooling process by hydrocarbons and carburized in the reducing process too.

Although the present invention has been described with the drawings, It is not limited to the above embodiments 1 to 4. Various modifications can be made without departing from the philosophy of the present invention.

For example, in the embodiments 1 to 4, an independent reforming and reducing gas line using the auto-thermal reformer 8 for one vertical reduction furnace 1 has been described, but they can be used in combination with other gas circulation loops.

A reformed gas produced by applying the present invention from a part of the top gas or circulating gas of the existing reduced iron production facility is merged with the existing reformed gas into the vertical reduction furnace. Then it is possible to increase the amount of the reducing gas and improve the production capacity of the existing reduced iron production facility.

On the contrary, the reformed gas may be produced by using the reformer adopted in the Midrex process or the HYL process as an auxiliary to the present invention, and both gases may be introduced into the vertical reduction furnace.

Further, in the above-described embodiments 1 to 4, the method of adjusting the saturated vapor pressure in the circulating gas by adjusting the outlet pressure and temperature of the moisture adjusting device (top gas scrubber) 4 is shown for adjusting the amount of water vapor component of the circulating gas. However, an aftercooler or a steam mixer may be installed on the outlet side of the circulating gas compressor 5 or CO₂ remover 6 to adjust the steam component.

Further, a part of the gas of the first gas mixer 7a or the second gas mixer 9 may be introduced into a tower or a fluidized bed filled with a solid hydrocarbon such as waste plastic or coal. Such solid hydrocarbon or coal is decomposed thermally or partially oxidized with an oxygen-containing gas in the tower or a fluidized bed. Those decomposing reactions generate hydrogen, carbon monoxide, and a hydrocarbon-containing gas, and they may be used as a reducing gas containing hydrocarbon.

When using waste plastic, it is very suitable and valid for areas where hydrocarbon-containing gas is expensive or where waste plastic treatment is required because the amount of hydrocarbon-containing gas required can be reduced, and at the same time, waste plastic can be treated.

In addition, a part of the top gas is branched, mixed with the oxygen-containing gas and water vapor as needed, are introduced into a solid hydrocarbon treatment facility such as a waste plastic treatment facility before mixing with the oxygen-containing gas. The solid hydrocarbon is partially oxidized and decomposed to generate hydrogen, carbon monoxide, and a hydrocarbon-containing gas and is used as a reducing gas containing hydrocarbon.

In addition, it is possible to respond in various ways according to each demand, such as a request from an electric furnace downstream or even if there is no electric furnace downstream and the reduced iron is directly exported.

For example, when a duty specification of the raw material handling equipment of an electric furnace is room temperature, and when the reduced iron at room temperature is melted in the electric furnace, the reduced iron with a high carbon content is desired because the oxygen blows into the electric furnace as much as possible is required to increase productivity.

In this case, as described above, the cooling gas aftercooler 15 or the like lowers the inlet temperature of the cooling gas to the reduction furnace 1 as low as possible so that the temperature of the reduced iron becomes room temperature while lowering the flow rate of the cooling gas for cooling. It makes it possible to raise the outlet temperature of cooling zone 12 and increase the amount of carbon in reduced iron with a hydrocarbon-containing gas preheated to a high temperature. Consequently, this operation can produce and supply high carbon-containing reduced iron at room temperature.

Further, the cooling gas aftercooler system for introducing low-temperature cooling gas may be a chiller type aftercooler alone or a mixer type that mixes hydrocarbon-containing gas cooled by its adiabatic expansion or the like. In addition, a lower temperature hydrocarbon-containing gas may be mixed with the circulating cooling gas cooled by the chiller type aftercooler using a chiller type aftercooler and a hydrocarbon-containing gas mixer type aftercooler. The further cooled gas can be introduced into the cooling zone.

While the hydrocarbon-containing gas A5 is introduced into the cooling gas aftercooler 15 in Figs. 1 to 5, it may be introduced from the appropriate position, such as the inlet side and the outlet side of the cooling gas compressor 14, according to the gas pressure and the desired cooling gas temperature. Further, it may be introduced into the inlet or outlet of the chiller-type cooler depending on the configuration of the cooling after cooler 15 and the hydrocarbon-containing gas temperature. Furthermore, it may be introduced into the mixer when a low-temperature hydrocarbon gas-containing gas mixer (mixer type aftercooler) is provided.

While a part of cooling gas with additional cooling through the cooling gas aftercooler 15 and the cooling gas without additional cooling is separately introduced into the cooling zone 12 in Figs. 1 to 5, the present invention is not limited to this configuration. All the cooling gas may be cooled by the cooling gas aftercooler 15 and introduced into the cooling zone 12. Moreover, the further cooled and uncooled cooling gas may be mixed and introduced into the cooling zone 12.

Further, as described above, when a large amount of cooling gas is extracted to the reduction zone 2 or the circulating gas line, it is necessary to supply a large amount of hydrocarbon-containing gas to the cooling zone 12, and the circulating cooling gas volume is reduced. Therefore, the hydrocarbon-containing gas only or with a small amount of circulating cooling gas is supplied via the cooling gas aftercooler 15 to the lower part of the cooling zone 12, while most or all of the circulating cooling gas from the cooling gas compressor 14 may be supplied to cooling zone 12 without the cooling gas aftercooler 15.

Further, the reduction zone 2 and the cooling zone 12 may be separated, and a high-temperature cooling gas may be introduced into reduction zone 2. Alternatively, cooling zone 12 may be divided and provide an intermediate cooling zone 21 to produce a high-temperature cooling gas and contact with high-temperature reduced iron.

On the other hand, when the transport equipment has a high-temperature specification, for example, an equipment specification capable of melting reduced iron at 500 °C or higher, if the amount of carbon contained in the reduced iron is too high, a decarburization process is required after complete melting in an electric furnace. Therefore, the productivity of the electric furnace is reduced, on the contrary.

In this case, if the cooling gas is completely stopped and the high-concentration hydrocarbon-containing gas is not introduced into the cooling zone 12 and the reduction zone 2, the cracking reaction of the hydrocarbon gas does not occur, and the high-temperature low carbon content reduced iron can be produced and supplied.

Further, when reduction zone 2 and cooling zone 12 are separated, as shown in Fig. 2, the reduced iron may be discharged directly from reduction zone 2.

Further, when producing hot briquette iron (HBI) for transporting direct reduced iron by sea, a hot briquette machine is arranged downstream of the vertical reduction furnace 1, and high temperature reduced iron is directly supplied from reduction zone 2 to the briquette machine and HBI can be produced and supplied.

Furthermore, when reduced iron at an intermediate temperature is required, for example, bypassing the aftercooler 15 for a part of the cooling gas, it is possible to raise the inlet temperature of the cooling gas to some extent and increase the amount of the cooling gas. In this case, the outlet temperature of cooling zone 12 becomes medium temperature, and medium carbon-containing reduced iron can be produced and supplied at medium temperature.

Since the carbon content in the reduced iron can be adjusted regardless of the production method and conditions of reformed gas, an auto-thermal reformer may not be used, and for example, the existing direct reduced iron production equipment may be modified. Specifically, the cooling zone 12, intermediate cooling zone 21, and cooling gas loop 23 configurations of the embodiments 1 to 4 described above can be incorporated into existing direct reduced iron production facilities with an external heat reformer (reformer) and external combustion circulating gas preheater (preheater). As a result, even with the existing direct reduced iron production facilities, the amount of carbon in the reduced iron can be easily adjusted to obtain a high-quality-reduced iron.

Further, when the heated cooling gas is mixed with the first hydrocarbon-containing gas mixer7b, it eliminates the need for a high-temperature compressor by applying an ejector type that is simple in terms of equipment and a highly reliable system.

It is even better to use a high-temperature dust remover, such as a ceramic filter, before mixing because it does not cause catalyst problems due to reduced iron powder or the like in the auto-thermal reformer 8.

Further, the cooling gas loop 23 of the present invention may be combined with the equipment for hydrogen reduction iron making. That is, carbon can be added to the reduced iron by hydrocarbons in cooling zone 12 and the lower parts of reduction zone 2, even if the iron oxide is reduced with hydrogen.

In this case, since the iron oxide is reduced with hydrogen, carbon dioxide is not generated due to the reduction. The carburizing reaction in the cooling zone 12 is;

CH₄ = C + 2H₂

Therefore, carbon dioxide is not generated by the carburizing reaction. Accordingly, the generation of carbon dioxide becomes slight due to the reforming of a small amount of hydrocarbon introduced to the reduction zone 2 only.

Therefore, a major drawback of hydrogen reduction iron making, that is, the lack of the amount of carbon required in reduced iron, can be solved, and the purpose of the significant reduction in carbon dioxide generation is achieved almost the same as the hydrogen reduction.

Further, the gas duct for the circulating gas line 16b for mixing the cooling gas extracted from the reduction furnace 1 with the circulating gas may be applied not only to the embodiment 2 but also to the embodiment 1, 3 or 4. When applied to the embodiment 1 or 4, a gas duct for a circulating gas line 16b may be provided between the cooling gas outlet of the cooling zone 12 and the direct contact type water-cooled cooling gas cooler 13. Further, when applied to the embodiment 3, it is sufficient that the gas duct for the circulation gas line 16b is provided at any one or both of the positions between the cooling gas outlet of the cooling zone 12 and the direct contact type water-cooled cooling gas cooler 13 and any position of the cooling gas loops 231 in the case of the intermediate cooling zone 21 because it does not have a device for direct water-contact cooling. In the embodiments 1, 3 and 4, the gas duct for circulating gas line 16b constitutes the gas duct 16.

Further, the methane generator 24 is not limited to the embodiment 4 and may be applied to the embodiment 2 or 3.

Further, the methane generation device 24 requires cooling since the methane production reaction is exothermic. When it is cooled with a circulating gas, the circulating gas can be preheated. Moreover, when using CO₂ remover, which needs regenerative heat, it is possible to separate and recover CO₂ and regenerate methane efficiently. For example, the CO₂ recovery liquid can be regenerated by steam generated with the methane generation reaction heat.

Further, the second gas mixer 9, the reformed gas cooler 10, the reformed gas mixer 11, and the cooling gas aftercooler 15 are provided in the direct reduced iron production facilities 30a, 30b, 30c, 30d of the embodiments 1 to 4. However, they are not vital configurations and may be provided as needed. Further, heat exchanger 3 may include at least one of a top gas heat recovery heat exchanger 3a and a circulating gas preheater (preheater 3b). Further, the line for introducing the hydrocarbon-containing gas A5 shown in Figs. 1 to 5 into the cooling gas loop 23 is not limited to the position shown in Figs. 1 to 5, and any arbitrary position at cooling gas loop 23 can be used.

### DESCRIPTION OF REFERENCE CHARACTERS

- 1: Vertical reduction furnace
- 2: Reduction zone
- 3: Heat exchanger
- 3a: Top gas heat recovery heat exchanger
- 3b: Circulating gas preheater (preheater)
- 4: Moisture regulator (top gas scrubber)
- 5: Circulating gas compressor
- 6: CO₂ remover
- 7a: First gas mixer
- 7b: First hydrocarbon-containing gas mixer
- 8: Auto-thermal reformer (reformer)
- 9: Second gas mixer
- 10: Reformed gas cooler
- 11: Reformed gas mixer
- 12: Cooling zone
- 13: Cooling gas scrubber (direct contact type water-cooled cooling gas cooler)
- 14: Cooling gas compressor
- 15: Cooling gas aftercooler
- 16: Gas duct (cooling gas connecting duct)
- 16a: Gas duct for reduction zone
- 16b: Gas duct for circulating gas line
- 17: Cooling gas dust remover
- 18: Cooling gas dust remover
- 19: Cooling gas heat exchanger (boiler)
- 20: Intermediate cooling gas compressor
- 21: Intermediate cooling zone
- 22: Chute
- 23: Cooling gas loop
- 231: Upper cooling gas loop
- 232: Lower cooling gas loop
- 24: Methane generator
- 30a, 30b, 30c, 30d: Direct reduced iron production facility
- A1, A2, A3, A4 A5: Hydrocarbon-containing gas
- B1, B2: High-concentration oxygen-containing gas
- C1: Hydrogen-containing gas

## Claims

1. A direct reduced iron production facility for producing direct reduced iron (Cold DRI) by reducing an iron oxide raw material with a reducing gas and cooling the iron oxide raw material in a vertical reduction furnace,
wherein the vertical reduction furnace includes a reduction zone and a cooling zone,
the production facility includes a cooling gas loop for circulating a cooling gas for cooling the reduced iron produced in the vertical reduction furnace,
the cooling gas has a hydrocarbon concentration of 50% or more, and
the cooling gas loop is configured to adjust a flow rate of a cooling gas introduced into the vertical reduction furnace and includes a cooling gas aftercooler to adjust the temperature of the cooling gas at the inlet of the reduction furnace.

2. A direct reduction iron production facility for producing direct reduction iron (Cold DRI) by reducing an iron oxide raw material with a reduction gas and cooling the iron oxide raw material in a vertical reduction furnace,
wherein the vertical reduction furnace includes a reduction zone and a cooling zone,
the reduction zone and the cooling zone are configured as independent furnaces and are connected by a chute for transferring the reduced iron into the cooling zone and by a gas duct for the reduction zone to flow the cooling gas into the reduction zone.

3. A direct reduced iron production facility for producing direct reduction iron (Cold DRI) by reducing an iron oxide raw material with a reduction gas and cooling the iron oxide raw material in a vertical reduction furnace,
the direct reduced iron production facility comprising: a cooling gas loop for circulating a cooling gas for cooling the direct reduced iron produced in the vertical reduction furnace,
wherein the vertical reduction furnace includes a reduction zone, a cooling zone, and an intermediate cooling zone provided between the reduction zone and the cooling zone,
the cooling gas loop includes an upper cooling gas loop provided in the intermediate cooling zone and a lower cooling gas loop provided in the cooling zone, and
an outlet temperature of the cooling gas of the upper cooling gas loop is higher than an outlet temperature of the cooling gas of the lower cooling gas loop at an outlet of the cooling gas of the vertical reduction furnace.

4. The direct reduced iron production facility according to any one of claims 1 to 3, wherein the inlet temperature of at least a portion of the cooling gas introduced into the cooling zone of the vertical reduction furnace is 35°C or lower.

5. The direct reduced iron production facility according to any one of claims 1 to 4, wherein a reformer for producing reducing gas is provided, and
the cooling gas extracted from the cooling zone of the vertical reduction furnace is mixed with at least one of the reducing gas to be introduced into the vertical reduction furnace and the gas upstream of the reformer without going through a direct-contact water-cooled cooling gas cooler.

6. A direct reduced iron production facility for producing direct reduced iron by contacting iron oxide raw materials with reducing gas in a vertical reduction furnace comprising:
a moisture content adjusting device for adjusting the moisture content of the gas discharged from the vertical reduction furnace;
a first gas mixing device for mixing oxygen-containing gas and hydrocarbon-containing gas with the gas whose moisture content has been adjusted; and
an auto-thermal reformer for reforming the mixed gas with self-energy, and
the first gas mixing device adjusts the gas inlet and outlet temperatures of the auto-thermal reformer and the reduction degree of the outlet gas to be within appropriate ranges by adjusting the amounts of the oxygen-containing gas and the hydrocarbon-containing gas to be mixed.

7. The direct reduced iron production facility according to claim 6, further comprises a second gas mixing device that mixes oxygen-containing gas and hydrocarbon-containing gas with the gas discharged from the autothermal reformer.

8. The direct reduced iron production facility according to claims 6 or 7, further comprises a CO₂ remover for removing a part or all of the carbon dioxide from a gas discharged from the vertical reduction furnace.

9. The direct reduced iron production facility according to any one of claims 6 to 8, wherein the inlet gas pressure of the auto-thermal reformer is less than 600 kPa (A).

10. The direct reduced iron production facility according to any one of claims 6 to 9, further comprising a heat exchanger configured to preheat the gas discharged from the vertical reduction furnace between the vertical reduction furnace and the first gas mixing device,
wherein a temperature of the gas after preheating in the heat exchanger is less than 850°C.

11. The direct reduced iron production facility according to any one of claims 6 to 10, wherein an amount of oxygen and an amount of hydrocarbon gas to be mixed in the first gas mixing device are adjusted such that a temperature of a gas at an inlet of the auto-thermal reformer is 1500°C or lower and a temperature of a gas at an outlet of the auto-thermal reformer is 700°C or higher.

12. The direct reduction iron production facility according to claim 11, wherein the auto-thermal reformer has multiple stages, and
a reduction degree of the gas at the exit of the auto-thermal reformer of the last stage is 7 or higher.

13. The direct reduced iron production facility according to any one of claims 6 to 12, further comprises a cooling gas loop for circulating a cooling gas for cooling the reduced iron produced in the vertical reduction furnace,
wherein the cooling gas has a hydrocarbon concentration of 50% or more, and
the cooling gas loop is configured to adjust the flow rate of the cooling gas introduced into the vertical reduction furnace, and includes a cooling gas aftercooler to adjust the temperature of the cooling gas.

14. The direct reduction iron production facility according to any one of claims 6 to 12, wherein the vertical reduction furnace includes a reduction zone and a cooling zone, and
the reduction zone and the cooling zone are configured as independent furnaces and are connected by a chute for transferring the reduced iron into the cooling zone and by a gas duct for the reduction zone to flow the cooling gas into the reduction zone.

15. The direct reduced iron production facility according to any one of claims 6 to 12, further comprises a cooling gas loop for circulating a cooling gas for cooling the direct reduced iron produced in the vertical reduction furnace,
wherein the vertical reduction furnace includes a reduction zone, a cooling zone, and an intermediate cooling zone provided between the reduction zone and the cooling zone,
the cooling gas loop includes an upper cooling gas loop provided in the intermediate cooling zone and a lower cooling gas loop provided in the cooling zone, and
an outlet temperature of the cooling gas of the upper cooling gas loop is higher than an outlet temperature of the cooling gas of the lower cooling gas loop at an outlet of the cooling gas of the vertical reduction furnace.

16. A direct reduced iron production facility for producing direct reduced iron by contacting iron oxide raw materials with reducing gas in a vertical reduction furnace comprising:
a CO₂ remover that removes a part or all of the carbon dioxide from a gas discharged from the vertical reduction furnace; and
a methane generator that produces methane by mixing hydrogen-containing gas with a gas containing mainly of carbon dioxide separated and recovered by the CO₂ remover, and
wherein the produced methane is used in the direct reduced iron production facility.

17. The direct reduced iron production facility according to any one of claims 1 to 15, further comprising;
a CO₂ remover that removes a part or all of the carbon dioxide from the gas discharged from the vertical reduction furnace; and
a methane generator that produces methane by mixing hydrogen-containing gas with a gas consisting mainly of carbon dioxide separated and recovered by the CO₂ remover, and
wherein the produced methane is used in the direct reduced iron production facility.

18. A method for producing direct reduced iron by contacting iron oxide raw materials with reducing gas in a vertical reduction furnace comprising;
a moisture adjusting step of adjusting moisture of a gas discharged from the vertical reduction furnace;
a first gas mixing step of mixing an oxygen-containing gas and a hydrocarbon-containing gas with the moisture-adjusted gas; and
a reformed gas producing step of reforming the mixed gas with self-energy to produce a reformed gas.
